# EUROPEAN PATENT APPLICATION

(11) **EP 4 300 298 A1**
(43) Date of publication of application: **03.01.2024**
(21) Application number: 21928197.9
(22) Date of filing: 13.08.2021
(51) Int. Cl.: G06F 9/455, G06F 9/451, G06F 15/78, B60R 16/023

(54) **VEHICULAR DISPLAY DEVICE**

(30) Priority: 26.02.2021 KR 20210026453; 23.04.2021 KR 20210053004
(71) Applicant: LG Electronics Inc., Yeongdeungpo-gu Seoul 07336 (KR)
(72) Inventor: YOON, Jaegu, Seoul 06772 (KR); YANG, Yuseok, Seoul 06772 (KR); KIM, Eunjin, Seoul 06772 (KR); JEONG, Daeyoung, Seoul 06772 (KR); HAN, Dongwoo, Seoul 06772 (KR); YOON, Jaegu, Seoul 06772 (KR); LEE, Dongkyu, Seoul 06772 (KR); JUNG, Dukyung, Seoul 06772 (KR)
(74) Representative: Vossius & Partner Patentanwälte Rechtsanwälte mbB
(86) International application number: PCT/KR2021/010772
(87) International publication number: WO 2022/181903

(57) **Abstract**

A display apparatus for vehicle is disclosed. The display apparatus includes a first display and a second display located in a vehicle, a signal processing device including a processor configured to perform signal processing for the first display and the second display, and a second signal processing device including a second processor configured to perform signal processing for a third display, wherein the processor in the signal processing device is configured to execute first to third virtual machines on a hypervisor in the processor, and, in response to the signal processing device being operated as a master signal processing device, the first virtual machine in the processor is configured to share at least some of data with the second signal processing device for divided processing of data. Consequently, the plurality of signal processing devices for the plurality of displays in the vehicle may divide and process data.

## Description

### Technical field of the invention

The present disclosure relates to a display apparatus for vehicle, and more particularly to a display apparatus for vehicle capable of dividing and processing data using a plurality of signal processing devices for a plurality of displays in a vehicle.

### Background technology

A vehicle is an apparatus that a driver moves in a desired direction. A representative example of the vehicle is a car.

Meanwhile, a display apparatus for vehicle is mounted in the vehicle for convenience of users who use the vehicle.

For example, a display is disposed in a cluster in order to display various kinds of information. Meanwhile, in order to display vehicle driving information, various displays, such as an audio video navigation (AVN) display and a rear seat entertainment display, are mounted in the vehicle, in addition to the cluster.

As the number of displays in the display apparatus for vehicle is increased, as described above, a plurality of signal processing devices for a plurality of displays is used.

Meanwhile, when the plurality of signal processing devices for the plurality of displays is used, resources may be inefficiently managed if the signal processing devices do not share data.

### Detailed description of the invention

### Technical objectives

An object of the present disclosure is to provide a display apparatus for vehicle capable of dividing and processing data using a plurality of signal processing devices for a plurality of displays in a vehicle.

Another object of the present disclosure is to provide a display apparatus for vehicle capable of efficiently managing resources using a plurality of signal processing devices for a plurality of displays in a vehicle.

Another object of the present disclosure is to provide a display apparatus for vehicle capable of setting any one of a plurality of signal processing devices for a plurality of displays in a vehicle as a master signal processing device in order to efficiently perform data processing.

Another object of the present disclosure is to provide a display apparatus for vehicle capable of performing high-speed data communication between a plurality of virtual machines or a plurality of signal processing devices.

A further object of the present disclosure is to provide a display apparatus for vehicle capable of performing high-speed data communication even though a plurality of virtual machines or a plurality of signal processing devices is driven by different operating systems.

### Technical solutions

In accordance with an aspect of the present disclosure, the above and other objects can be accomplished by the provision of a display apparatus for vehicle, the display apparatus including a first display and a second display located in a vehicle, a signal processing device including a processor configured to perform signal processing for the first display and the second display, and a second signal processing device including a second processor configured to perform signal processing for a third display, wherein the processor in the signal processing device is configured to execute first to third virtual machines on a hypervisor in the processor, and, in response to the signal processing device being operated as a master signal processing device, the first virtual machine in the processor is configured to share at least some of data with the second signal processing device for divided processing of data.

Meanwhile, in response to the second signal processing device being operated as a master signal processing device, a server virtual machine in the second processor may share at least some of data with the signal processing device for divided processing of data.

Meanwhile, the first virtual machine in the processor may check capability information or resource information of the second signal processing device, and may be configured to operate any one of the second signal processing device and the signal processing device as the master signal processing device based on the capability information or the resource information of the second signal processing device.

Meanwhile, the processor in the signal processing device may execute the first to third virtual machines on the hypervisor in the processor, the second virtual machine may be operated for the first display, and the third virtual machine may be operated for the second display.

Meanwhile, the first virtual machine in the processor may receive and process wheel speed sensor data of the vehicle, and may transmit the processed wheel speed sensor data to at least one of the second virtual machine or at least one of the second virtual machine or the third virtual machine, or the second signal processing device.

Meanwhile, the first virtual machine in the processor may transmit an access message for access to a deserializer network to the second signal processing device, and, in response to no access allowance message for access to the deserializer network being received from the second signal processing device, may be configured to operate the signal processing device as the master signal processing device.

Meanwhile, the first virtual machine in the processor may transmit an access message for access to the deserializer network to the second signal processing device, and, in response to an access allowance message for access to the deserializer network being received from the second signal processing device, may be configured to operate any one of the second signal processing device and the signal processing device as the master signal processing device based on the capability information or the resource information of the second signal processing device.

Meanwhile, the first virtual machine in the processor may check whether a server virtual machine in the second signal processing device is driven based on protocol information received from the outside, and, in response to the server virtual machine in the second signal processing device being not driven, may be configured to operate the signal processing device as the master signal processing device.

Meanwhile, the first virtual machine in the processor may check whether resources of the second signal processing device are sharable based on the capability information or the resource information of the second signal processing device, and, in response to the resources being sharable, may share at least some of processed data with the second signal processing device.

Meanwhile, the first virtual machine in the processor may transmit an authority transfer message to the server virtual machine in the second processor during operation of the signal processing device as the master signal processing device, and, upon receiving an acknowledgement message from the server virtual machine in the second processor, may be configured to change the second signal processing device to the master signal processing device.

Meanwhile, the first virtual machine in the processor may receive capability information or resource information of a plurality of virtual machines driven in the second signal processing device, and may control any one of the plurality of virtual machines driven in the second signal processing device based on the capability information or the resource information of the plurality of virtual machines.

Meanwhile, the first virtual machine in the processor may be configured to write camera data in a first shared memory and transmit some of the camera data to the second signal processing device, the server virtual machine in the second processor may be configured to write the received some of the camera data in a second shared memory, and a guest virtual machine in the second processor may process at least some of the data written in the second shared memory and may perform control such that the processed data are written in the second shared memory.

Meanwhile, the second virtual machine in the processor may be configured to display an image on the display based on the data written in the second shared memory.

Meanwhile, the first virtual machine in the processor may create a command queue for distributed processing of the data.

Meanwhile, the command queue may include at least one of command type information, buffer ID information, or buffer address information.

Meanwhile, the first virtual machine in the processor may create command queues corresponding to the number of virtual machines for distributed processing of the data.

Meanwhile, the first virtual machine in the processor may write some of the camera data in the first shared memory to be transmitted to the second processor, and the guest virtual machine in the second processor may perform object detection for the received camera data and may be configured to write the data from which an object has been detected in the second shared memory.

In accordance with another aspect of the present disclosure, there is provided a display apparatus for vehicle, the display apparatus including a first display and a second display located in a vehicle, a signal processing device including a processor configured to perform signal processing for the first display and the second display, and a second signal processing device including a second processor configured to perform signal processing for a third display, wherein the processor in the signal processing device is configured to execute first to third virtual machines on a hypervisor in the processor, and the first virtual machine in the processor is configured to check capability information or resource information of the second signal processing device and is configured to operate any one of the second signal processing device and the signal processing device as a master signal processing device based on the capability information or the resource information of the second signal processing device.

### Effects of the invention

A display apparatus for vehicle according to an embodiment of the present disclosure includes a first display and a second display located in a vehicle, a signal processing device including a processor configured to perform signal processing for the first display and the second display, and a second signal processing device including a second processor configured to perform signal processing for a third display, wherein the processor in the signal processing device is configured to execute first to third virtual machines on a hypervisor in the processor, and, in response to the signal processing device being operated as a master signal processing device, the first virtual machine in the processor is configured to share at least some of data with the second signal processing device for divided processing of data. Consequently, the plurality of signal processing devices for the plurality of displays in the vehicle may divide and process data. In addition, the plurality of signal processing devices may efficiently manage resources.

Meanwhile, in response to the second signal processing device being operated as a master signal processing device, a server virtual machine in the second processor may share at least some of data with the signal processing device for divided processing of data. Consequently, any one of the plurality of signal processing devices may be set as the master signal processing device, whereby data processing may be efficiently performed.

Meanwhile, the first virtual machine in the processor may check capability information or resource information of the second signal processing device, and may be configured to operate any one of the second signal processing device and the signal processing device as the master signal processing device based on the capability information or the resource information of the second signal processing device. Consequently, any one of the plurality of signal processing devices may be set as the master signal processing device, whereby data processing may be efficiently performed.

Meanwhile, the processor in the signal processing device may execute the first to third virtual machines on the hypervisor in the processor, the second virtual machine may be operated for the first display, and the third virtual machine may be operated for the second display. Consequently, the plurality of signal processing devices for the plurality of displays in the vehicle may divide and process data.

Meanwhile, high-speed data communication may be performed between the plurality of virtual machines or the plurality of signal processing devices. Furthermore, high-speed data communication may be performed even though the plurality of virtual machines or the plurality of signal processing devices is driven by different operating systems.

Meanwhile, the first virtual machine in the processor may receive and process wheel speed sensor data of the vehicle, and may transmit the processed wheel speed sensor data to at least one of the second virtual machine or at least one of the second virtual machine or the third virtual machine, or the second signal processing device. Consequently, at least one virtual machine or the second signal processing device may share the wheel speed sensor data of the vehicle.

Meanwhile, the first virtual machine in the processor may transmit an access message for access to a deserializer network to the second signal processing device, and, in response to no access allowance message for access to the deserializer network being received from the second signal processing device, may be configured to operate the signal processing device as the master signal processing device. Consequently, any one of the plurality of signal processing devices may be set as the master signal processing device, whereby data processing may be efficiently performed.

Meanwhile, the first virtual machine in the processor may transmit an access message for access to the deserializer network to the second signal processing device, and, in response to an access allowance message for access to the deserializer network being received from the second signal processing device, may be configured to operate any one of the second signal processing device and the signal processing device as the master signal processing device based on the capability information or the resource information of the second signal processing device. Consequently, any one of the plurality of signal processing devices may be set as the master signal processing device, whereby data processing may be efficiently performed.

Meanwhile, the first virtual machine in the processor may check whether a server virtual machine in the second signal processing device is driven based on protocol information received from the outside, and, in response to the server virtual machine in the second signal processing device being not driven, may be configured to operate the signal processing device as the master signal processing device. Consequently, any one of the plurality of signal processing devices may be set as the master signal processing device, whereby data processing may be efficiently performed.

Meanwhile, the first virtual machine in the processor may check whether resources of the second signal processing device are sharable based on the capability information or the resource information of the second signal processing device, and, in response to the resources being sharable, may share at least some of processed data with the second signal processing device. Consequently, the plurality of signal processing devices may efficiently manage resources.

Meanwhile, the first virtual machine in the processor may transmit an authority transfer message to the server virtual machine in the second processor during operation of the signal processing device as the master signal processing device, and, upon receiving an acknowledgement message from the server virtual machine in the second processor, may be configured to change the second signal processing device to the master signal processing device. Consequently, any one of the plurality of signal processing devices may be set as the master signal processing device, whereby data processing may be efficiently performed.

Meanwhile, the first virtual machine in the processor may receive capability information or resource information of a plurality of virtual machines driven in the second signal processing device, and may control any one of the plurality of virtual machines driven in the second signal processing device based on the capability information or the resource information of the plurality of virtual machines. Consequently, the plurality of signal processing devices may efficiently perform data processing.

Meanwhile, the first virtual machine in the processor may be configured to write camera data in a first shared memory and transmit some of the camera data to the second signal processing device, the server virtual machine in the second processor may be configured to write the received some of the camera data in a second shared memory, and a guest virtual machine in the second processor may process at least some of the data written in the second shared memory and may be configured to write the processed data in the second shared memory. Consequently, the plurality of signal processing devices may efficiently perform data processing.

Meanwhile, the second virtual machine in the processor may be configured to display an image on the display based on the data written in the second shared memory. Consequently, the plurality of signal processing devices may efficiently perform data processing.

Meanwhile, the first virtual machine in the processor may create a command queue for distributed processing of the data. Consequently, the plurality of signal processing devices may efficiently perform data processing.

Meanwhile, the command queue may include at least one of command type information, buffer ID information, or buffer address information. Consequently, the plurality of signal processing devices may efficiently perform data processing.

Meanwhile, the first virtual machine in the processor may create command queues corresponding to the number of virtual machines for distributed processing of the data. Consequently, the plurality of signal processing devices may efficiently perform data processing.

Meanwhile, the first virtual machine in the processor may write some of the camera data in the first shared memory to be transmitted to the second processor, and the guest virtual machine in the second processor may perform object detection for the received camera data and may be configured to write the data from which an object has been detected in the second shared memory. Consequently, the plurality of signal processing devices may efficiently perform data processing.

A display apparatus for vehicle according to another embodiment of the present disclosure includes a first display and a second display located in a vehicle, a signal processing device including a processor configured to perform signal processing for the first display and the second display, and a second signal processing device including a second processor configured to perform signal processing for a third display, wherein the processor in the signal processing device is configured to execute first to third virtual machines on a hypervisor in the processor, and the first virtual machine in the processor is configured to check capability information or resource information of the second signal processing device and is configured to operate any one of the second signal processing device and the signal processing device as a master signal processing device based on the capability information or the resource information of the second signal processing device. Consequently, any one of the plurality of signal processing devices may be set as the master signal processing device, whereby data processing may be efficiently performed.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicle according to an embodiment of the present disclosure;
FIG. 3 illustrates an example of an internal block diagram of the display apparatus for vehicle of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view referred to in the description of operation of the system driven in the signal processing device according to the embodiment of the present disclosure;
FIG. 7 is a view showing an example of a system driven in the display apparatus for vehicle according to the embodiment of the present disclosure;
FIG. 8 is a flowchart showing an operation method of the display apparatus for vehicle according to the embodiment of the present disclosure; and
FIGS. 9A to 19 are views referred to in the description of FIG. 8.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

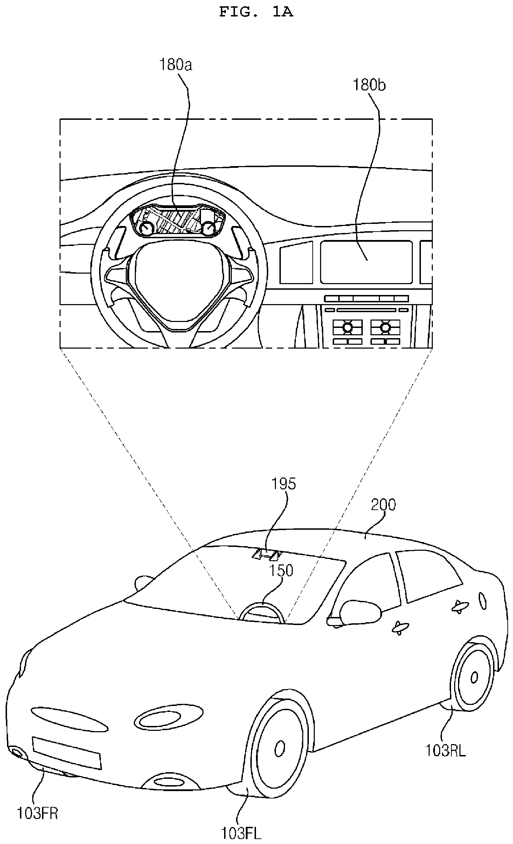

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

The embodiment of the present disclosure proposes a scheme for a display apparatus 100 for vehicle including a plurality of displays 180a and 180b to divide data processing.

Meanwhile, the vehicle 200 described in this specification may be a concept including all of a vehicle having an engine as a power source, a hybrid vehicle having an engine and an electric motor as a power source, and an electric vehicle having an electric motor as a power source.

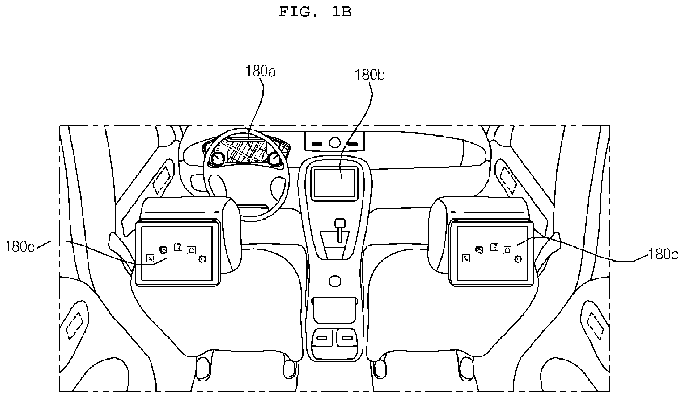

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be mounted in the vehicle.

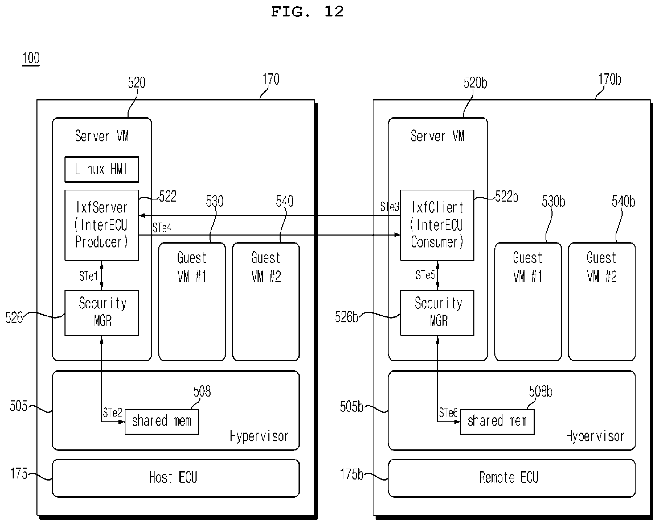

The embodiment of the present disclosure proposes a scheme for a display apparatus 100 for vehicle including a plurality of displays 180a to 180d to divide data processing. This will be described with reference to FIG. 12 and subsequent figures.

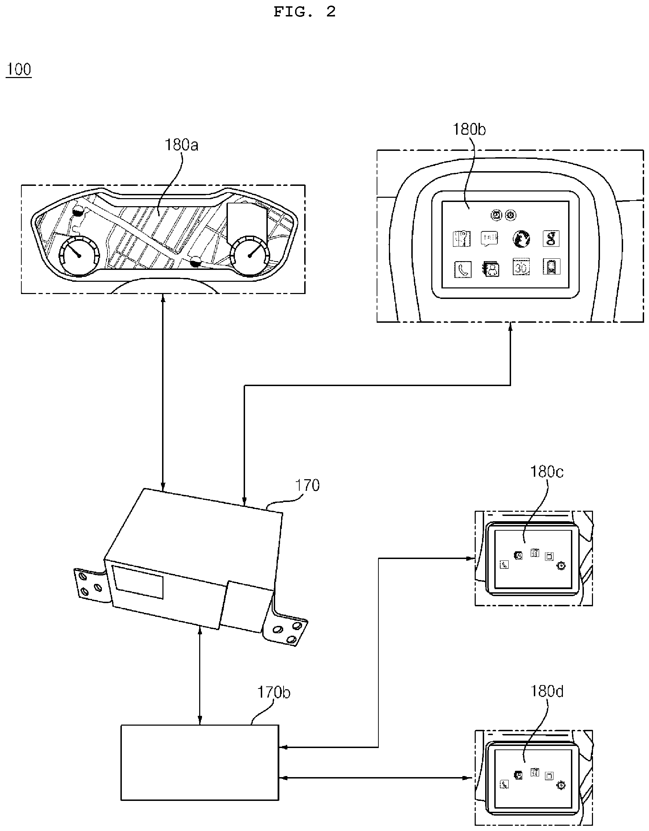

FIG. 2 is a view showing the external appearance of a display apparatus for vehicle according to an embodiment of the present disclosure.

The display apparatus 100 for vehicle according to the embodiment of the present disclosure may include a plurality of displays 180a and 180b, a signal processing device 170 configured to perform signal processing in order to display images and information on the plurality of displays 180a and 180b, at least one display 180c and 180d, and a second signal processing device 170b configured to perform signal processing in order to display images and information on the at least one display 180c and 180d.

The signal processing device 170 and the second signal processing device 170b may be disposed spaced apart from each other.

Meanwhile, the second signal processing device 170b may be operated based on a different operating system (OS) than the signal processing device 170.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

In the at least one display 180c and 180d, the third display 180c may be a right rear seat entertainment display of the vehicle, and the fourth display 180d may be a left rear seat entertainment display of the vehicle.

The at least one display 180c and 180d may display driving state information, simple navigation information, various kinds of entertainment information, or an image.

The signal processing device 170 may have a processor 175 provided therein, and first to third virtual machines 520 to 540 may be executed by a hypervisor 505 in the processor 175.

The first virtual machine 520 may correspond to a server virtual machine, and the second and third virtual machines may correspond to guest virtual machines.

Consequently, data communication may be performed between the first virtual machine 520 and the second or third virtual machine 530 or 540 according to a server interface and a client interface.

The second virtual machine 530 may be operated for the first display 180a, and the third virtual machine 540 may be operated for the second display 180b.

Meanwhile, the first virtual machine 520 in the processor 175 shares at least some of data with the second virtual machine 530 and the third virtual machine 540 for divided processing of data. Consequently, the plurality of signal processing devices for the plurality of displays in the vehicle may divide and process data.

Meanwhile, the first virtual machine 520 in the processor 175 may receive and process wheel speed sensor data of the vehicle, and may transmit the processed wheel speed sensor data to at least one of the second virtual machine 530 or the third virtual machine 540 or the second signal processing device 170b. Consequently, at least one virtual machine may share the wheel speed sensor data of the vehicle.

Meanwhile, the first virtual machine 520 in the processor 175 writes some of data in a first shared memory 508a to be transmitted to the second virtual machine 530, and writes some other of data in the first shared memory 508a to be transmitted to the third virtual machine 540. The second virtual machine 530 and the third virtual machine 540 are configured to process the received data, and write the processed data in a second shared memory 508b. Consequently, the plurality of signal processing devices for the plurality of displays in the vehicle may divide and process data.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may display the same information or the same images in a synchronized state.

The signal processing device 170 may have the processor 175 therein, and may execute the first to third virtual machines 520 to 540 on the hypervisor 505 in the processor 175.

The first virtual machine 520 may correspond to a server virtual machine, and the second and third virtual machines may correspond to guest virtual machines.

Consequently, data communication may be performed between the first virtual machine 520 and the second or third virtual machine 530 or 540 according to the server interface and the client interface.

Meanwhile, the second signal processing device 170b may have a second processor 175b therein, and may execute a server virtual machine 520b and a guest virtual machine 530b on a hypervisor 505b in the second processor 175b.

Meanwhile, some of the plurality of displays 180a to 180d may be operated based on a Linux Operating System (OS), and others may be operated based on a Web Operating System (OS) .

The signal processing device 170 and the second signal processing device 170b according to the embodiment of the present disclosure may divide and process data for the displays 180a to 180d configured to be operated under various operating systems.

Meanwhile, the signal processing device 170 and the second signal processing device 170b according to the embodiment of the present disclosure may be configured to operate the displays 180a to 180d under various operating systems also display the same information or the same images in a synchronized state.

Meanwhile, the signal processing device 170 and the second signal processing device 170b according to the embodiment of the present disclosure share at least some of data for divided processing of the data. Consequently, the plurality of signal processing devices for the plurality of displays in the vehicle may divide and process data. In addition, the plurality of signal processing devices may efficiently manage resources.

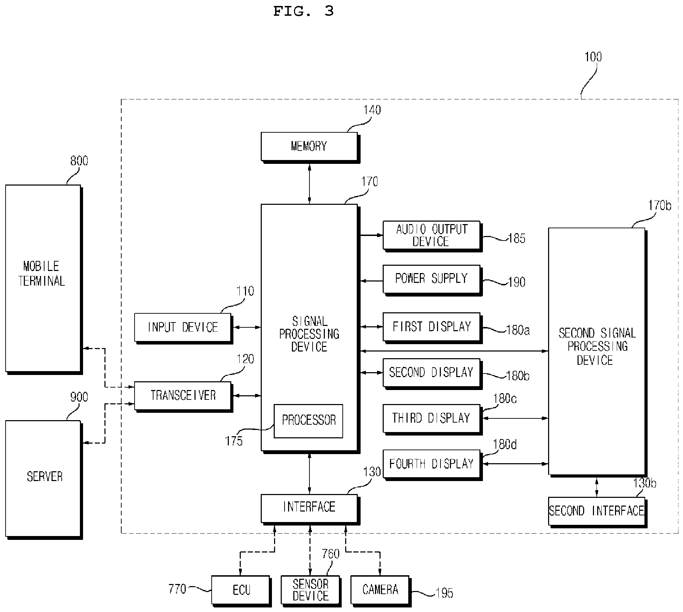

FIG. 3 illustrates an example of an internal block diagram of the display apparatus for vehicle according to the embodiment of the present disclosure.

Referring to the figure, the display apparatus 100 for vehicle according to the embodiment of the present disclosure may include an input device 110, a transceiver 120, an interface 130, a second interface 130b, a memory 140, a signal processing device 170, a second signal processing device 170b, a plurality of displays 180a to 180d, an audio output device 185, and a power supply 190.

The input device 110 may include a physical button or pad for button input or touch input.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 760, and may transmit the received information to the signal processing device 170.

The second interface 130b may receive sensor information from the electronic control unit (ECU) 770 or the sensor device 760, and may transmit the received information to the second signal processing device 170b.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicle, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicle.

For example, the signal processing device 170 may include a processor 175 configured to perform signal processing for the displays 180a and 180b.

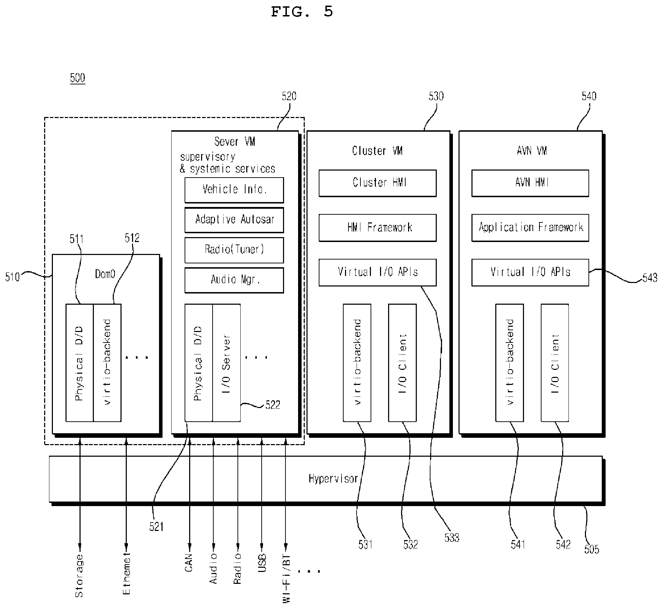

The processor 175 may execute the first to third virtual machines 520 to 540 on the hypervisor 505 (see FIG. 5) in the processor 175.

Among the first to third virtual machines 520 to 540 (see FIG. 5), the first virtual machine 520 may be called a server virtual machine, and the second and third virtual machines 530 and 540 may be called guest virtual machines.

The second virtual machine 530 may be operated for the first display 180a, and the third virtual machine 540 may be operated for the second display 180b.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may transmit the processed data to the second and third virtual machines 530 and 540.

Consequently, only the first virtual machine 520, among the first to third virtual machines 520 to 540, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 in the processor 175 writes some of data in the first shared memory 508a to be transmitted to the second virtual machine 530, and writes some other of data in the first shared memory 508a to be transmitted to the third virtual machine 540. The second virtual machine 530 and the third virtual machine 540 are configured to process the received data, and write the processed data in the second shared memory 508b. Consequently, the plurality of signal processing devices for the plurality of displays in the vehicle may divide and process data.

At this time, data may be any one of image data, audio data, navigation data, and voice recognition data.

Meanwhile, the first virtual machine 520 may process some other of data, and may be configured to write the processed data in the second shared memory 508b. That is, the first virtual machine 520 may perform data processing in addition to the second virtual machine 530 and the third virtual machine 540.

Meanwhile, the first virtual machine 520 may create command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the first virtual machine 520 in the processor 175 may create one command queue. Consequently, the same data may be synchronized and shared.

Meanwhile, the first virtual machine 520 may create command queues corresponding to the number of virtual machines for distributed processing of data.

Meanwhile, the first virtual machine 520 may be configured to transmit at least some of data to at least one of the second virtual machine 530 or the third virtual machine 540 or the second signal processing device 170b for distributed processing of data.

For example, the first virtual machine 520 may allocate the first shared memory 508a for transmitting at least some of data to at least one of the second virtual machine 530 or the third virtual machine 540 or the second signal processing device 170b, and image data processed by the second virtual machine 530 or the third virtual machine 540 may be written in the second shared memory 508b.

Meanwhile, the first virtual machine 520 may be configured to write data in the shared memory 508, whereby the second virtual machine 530 and the third virtual machine 540 share the same data.

For example, the first virtual machine 520 may perform control such that radio data or wireless communication data are written in the shared memory 508, whereby the second virtual machine 530 and the third virtual machine 540 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 in order to transmit the same data to the second virtual machine 530 and the third virtual machine 540.

That is, the first virtual machine 520 in the processor 175 may transmit the same data to the second virtual machine 530 and the third virtual machine 540 in a synchronized state using the shared memory 508 based on the hypervisor 505. Consequently, the plurality of displays 180a and 180b in the vehicle may display the same images in a synchronized state.

Meanwhile, the signal processing device 170 may process various signals, such as an audio signal, an image signal, and a data signal. To this end, the signal processing device 170 may be implemented in the form of a system on chip (SOC).

The second signal processing device 170b performs signal processing for the displays 180c and 180d for vehicle, and may include a second processor 175b to this end.

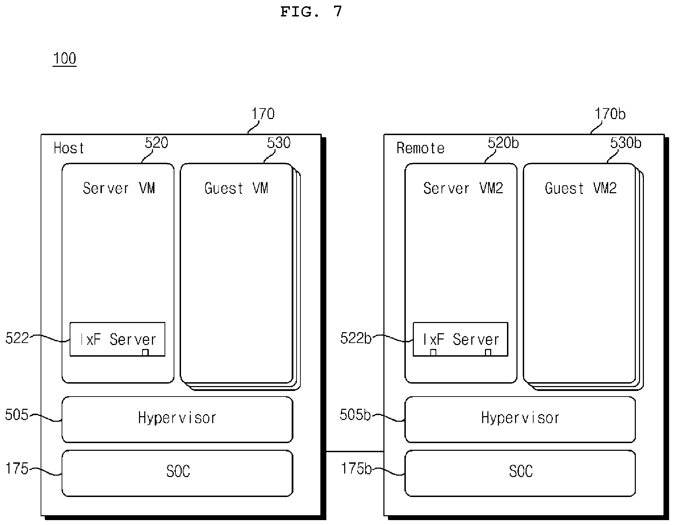

The second processor 175b may execute the server virtual machine 520b and the guest virtual machines 530b and 540b on the hypervisor 505b (FIG. 7) in the second processor 175b.

For example, the server virtual machine 520b in the second processor 175b may receive, process, and output vehicle sensor data, position information data, camera image data, audio data, or touch input data from the first virtual machine 520 in the processor 175 in the signal processing device 170.

As another example, the server virtual machine 520b may receive and process CAN communication data, audio data, radio data, USB data, and wireless communication data from the first virtual machine 520 in the processor 175 in the signal processing device 170 for the guest virtual machines 530b and 540b.

The server virtual machine 520b may transmit the processed data to the guest virtual machines 530b and 540b.

Consequently, only the server virtual machine 520b, among the server virtual machine 520b and the guest virtual machines 530b and 540b, may receive communication data and external input data, and may perform signal processing, whereby signal processing load of the guest virtual machines 530b and 540b may be reduced and 1:N data communication may be achieved, and therefore synchronization at the time of data sharing may be achieved.

Meanwhile, the server virtual machine 520b writes some of data in the shared memory 508a to be transmitted to the guest virtual machine 530b, and the guest virtual machines 530b and 540b process the received data, and may be configured to write the processed data in the shared memory 508b. Consequently, the plurality of signal processing devices for the plurality of displays in the vehicle may divide and process data.

At this time, data may be any one of image data, audio data, navigation data, and voice recognition data.

Meanwhile, the server virtual machine 520b may create command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the server virtual machine 520b in the second processor 175b may create one command queue. Consequently, the same data may be synchronized and shared.

Meanwhile, the server virtual machine 520b may create command queues corresponding to the number of virtual machines for distributed processing of data.

Meanwhile, the server virtual machine 520b may be configured to transmit at least some of data to at least one of the guest virtual machines 530b and 540b for distributed processing of data.

For example, the server virtual machine 520b may allocate the shared memory 508a for transmitting at least some of data to at least one of the guest virtual machines 530b and 540b, and image data processed by the guest virtual machine 530b or the guest virtual machine 540b may be written in the shared memory 508b.

Meanwhile, the server virtual machine 520b may be configured to write data in the shared memory 508b, whereby the guest virtual machines 530b and 540b share the same data.

For example, the server virtual machine 520b may be configured to write radio data or wireless communication data in the shared memory 508b, whereby the guest virtual machines 530b and 540b share the same data. Consequently, 1:N data sharing may be achieved.

Eventually, the server virtual machine 520b may process most of the data, whereby 1:N data sharing may be achieved.

Meanwhile, the server virtual machine 520b in the second processor 175b may be configured to set the shared memory 508b based on the hypervisor 505b in order to transmit the same data to the guest virtual machines 530b and 540b.

That is, the server virtual machine 520b in the second processor 175b may transmit the same data to the guest virtual machines 530b and 540b in a synchronized state using the shared memory 508b based on the hypervisor 505b. Consequently, the plurality of displays 180a to 180d in the vehicle may display the same images in a synchronized state.

Meanwhile, the second signal processing device 170b may process various signals, such as an audio signal, an image signal, and a data signal. To this end, the second signal processing device 170b may be implemented in the form of a system on chip (SOC).

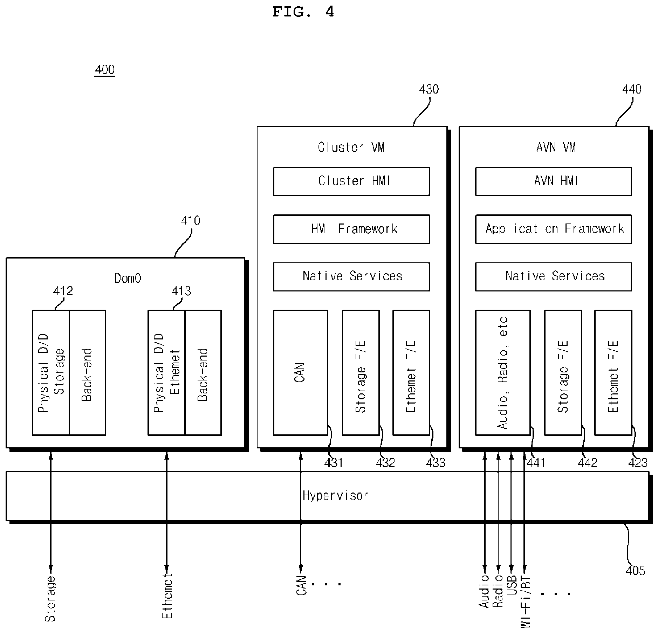

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed on a hypervisor 405 in the processor 175 in the signal processing device 170.

Meanwhile, the system 400 driven in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines such that various memory data and communication data are input and output not in the guest virtual machines but in the server virtual machine. This will be described with reference to FIG. 5 and subsequent figures.

FIG. 5 is a view showing an example of a system driven in a signal processing device according to an embodiment of the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 driven in the signal processing device 170 of FIG. 5 illustrates that a legacy virtual machine 510 is also executed on the hypervisor 505 in the processor 175.

The legacy virtual machine 510 may include an interface 511 for data communication with the memory 140 and Ethernet communication.

Meanwhile, the legacy virtual machine 510 may further include a virtio-backend interface 512 for data communication with the second and third virtual machines 530 and 540.

The first virtual machine 520 may include an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may include an input and output client interface 532 for data communication with the first virtual machine 520 and APIs 533 configured to control the input and output client interface 532.

In addition, the second virtual machine 530 may include a virtio-backend interface for data communication with the legacy virtual machine 510.

The second virtual machine 530 may receive memory data by communication with the memory 140 and Ethernet data by Ethernet communication from the virtio-backend interface 512 of the legacy virtual machine 510 through the virtio-backend interface.

Next, the third virtual machine 540 may include an input and output client interface 542 for data communication with the first virtual machine 520 and APIs 543 configured to control the input and output client interface 542.

In addition, the third virtual machine 540 may include a virtio-backend interface for data communication with the legacy virtual machine 510.

The third virtual machine 540 may receive memory data by communication with the memory 140 and Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may display the same data or the same images in a synchronized state.

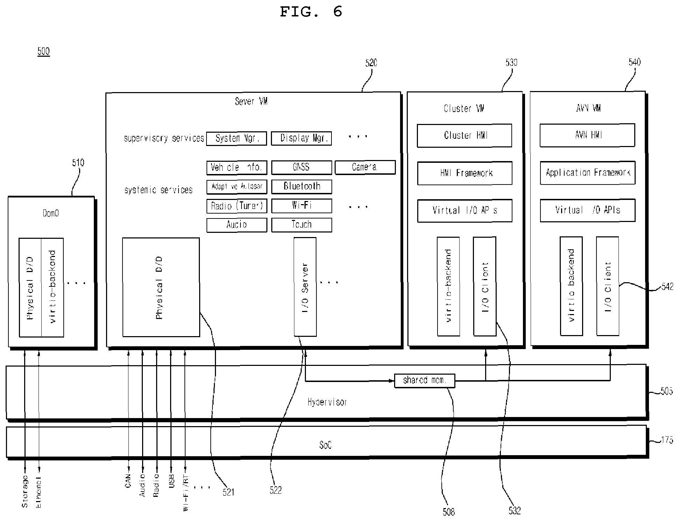

FIG. 6 is a view referred to in the description of operation of the system driven in the signal processing device according to the embodiment of the present disclosure.

Referring to the figure, the processor 175 in the signal processing device 170 executes the first to third virtual machines 520 to 540 on the hypervisor 505 in the processor 175, and the first virtual machine 520 in the processor 175 is configured to set the shared memory 508 based on the hypervisor 505 for transmission of the same data to the second and third virtual machines 530 and 540.

For example, the same image data may be illustrated as the same data. Consequently, the plurality of displays 180a and 180b in the vehicle may display the same images in a synchronized state.

Meanwhile, in the system 500 of FIG. 6, the processor 175 in the signal processing device 170 executes the first to third virtual machines 520 to 540 on the hypervisor 505 in the processor 175, and the first virtual machine 520 in the processor 175 may transmit the same data to the second and third virtual machines 530 and 540 in a synchronized state using the shared memory 508 based on the hypervisor 505.

For example, CAN communication data, audio data, radio data, USB data, wireless communication data, position information data, or touch data may be illustrated as the same data. Consequently, the plurality of displays 180a and 180b in the vehicle may display the same data in a synchronized state.

Meanwhile, although not shown in FIG. 6, the legacy virtual machine 510 may transmit memory data from the memory 140 and Ethernet data by Ethernet communication to the second and third virtual machines 530 and 540 in a synchronized state using the shared memory 508 based on the hypervisor 505. That is, it is possible to perform 1:N data communication with respect to the memory data or the Ethernet data, whereby it is possible to transmit the same data in a synchronized state.

FIG. 7 is a view showing an example of a system driven in the display apparatus for vehicle according to the embodiment of the present disclosure.

Referring to the figure, the display apparatus 100 for vehicle according to the embodiment of the present disclosure includes a signal processing device 170 including a processor 175 configured to perform signal processing for a first display 180a and a second display 180b and a second signal processing device 170b including a second processor 175b configured to perform signal processing for a third display 180c.

The processor 175 in the signal processing device 170 executes first to third virtual machines 520 to 540 on a hypervisor 505 in the processor 175.

Meanwhile, the second virtual machine 530, which is a guest virtual machine, is operated for the first display 180a, the third virtual machine 540, which is a guest virtual machine, is operated for the second display 180b, and the first virtual machine 520 is operated as a server virtual machine.

Meanwhile, the first virtual machine 520 in the processor 175 may receive and process wheel speed sensor data of the vehicle, and may transmit the processed wheel speed sensor data to at least one of the second virtual machine 530 or the third virtual machine 540 or the second signal processing device 170b. Consequently, at least one virtual machine or the second signal processing device 170b may share the wheel speed sensor data of the vehicle.

In the figure, the signal processing device 170 is shown as a host signal processing device, and the second signal processing device 170b is shown as a remote signal processing device. However, the present disclosure is not limited thereto.

Meanwhile, in response to the signal processing device 170 being operated as a master signal processing device, the first virtual machine 520 in the processor 175 shares at least some of data with the second signal processing device 170b for divided processing of data.

To this end, the first virtual machine 520 in the processor 175 may drive an input and output server interface 522.

Consequently, the plurality of signal processing devices for the plurality of displays in the vehicle may divide and process data. In addition, the plurality of signal processing devices may efficiently manage resources.

In addition, high-speed data communication may be performed between the plurality of virtual machines or the plurality of signal processing devices 170 and 170b. Furthermore, high-speed data communication may be performed even though the plurality of virtual machines or the plurality of signal processing devices 170 and 170b is driven by different operating systems.

For example, the first virtual machine 520 in the processor 175 may check capability information or resource information of the second signal processing device 170b, and may be configured to operate any one of the second signal processing device 170b and the signal processing device 170 as a master signal processing device 170 based on the capability information or resource information of the second signal processing device 170b. Consequently, the master signal processing device 170 may be set from among the plurality of signal processing devices, whereby data processing may be efficiently performed.

Meanwhile, the figure illustrates that a hypervisor 505b is driven on the second processor 175b in the second signal processing device 170b, a server virtual machine 520b and a guest virtual machine 530b are driven on the hypervisor 505b, and an input and output server interface 522b is driven in the server virtual machine 520b. Unlike this, however, the virtual machines may not be driven.

In this case, the first virtual machine 520 in the processor 175 may be configured to operate the signal processing device 170, which is one of the second signal processing device 170b and the signal processing device 170, as a master signal processing device 170. Consequently, data processing may be efficiently performed.

Meanwhile, the second signal processing device 170b, not the signal processing device 170, may be operated as a master signal processing device, and the signal processing device 170 may be operated as a slave signal processing device.

For example, in response to the second signal processing device 170b being operated as a master signal processing device 170, the server virtual machine 520b in the second processor 175b may share at least some of data with the signal processing device 170 for divided processing of data. Consequently, the master signal processing device 170 may be set from among the plurality of signal processing devices, whereby data processing may be efficiently performed.

Meanwhile, a display apparatus 100 for vehicle according to another embodiment of the present disclosure includes a signal processing device 170 including a processor 175 configured to perform signal processing for a first display 180a and a second display 180b and a second signal processing device 170b including a second processor 175b configured to perform signal processing for a third display 180c.

Meanwhile, the processor 175 in the signal processing device 170 according to the other embodiment of the present disclosure executes first to third virtual machines 520 to 540 on a hypervisor 505 in the processor 175.

Meanwhile, the first virtual machine 520 in the processor 175 according to the other embodiment of the present disclosure may check capability information or resource information of the second signal processing device 170b, and may be configured to operate any one of the second signal processing device 170b and the signal processing device 170 as a master signal processing device 170 based on the capability information or resource information of the second signal processing device 170b. Consequently, any one of the plurality of signal processing devices 170 and 170b may be set as a master signal processing device, whereby data processing may be efficiently performed.

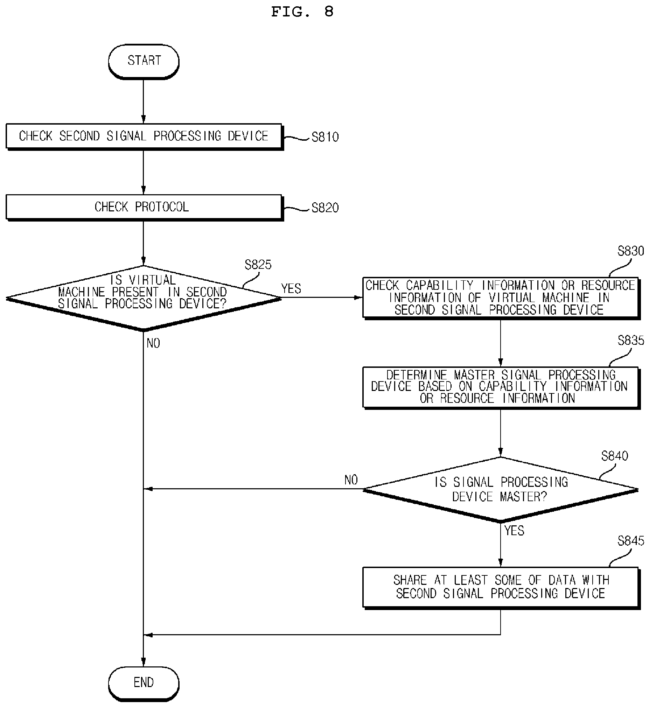

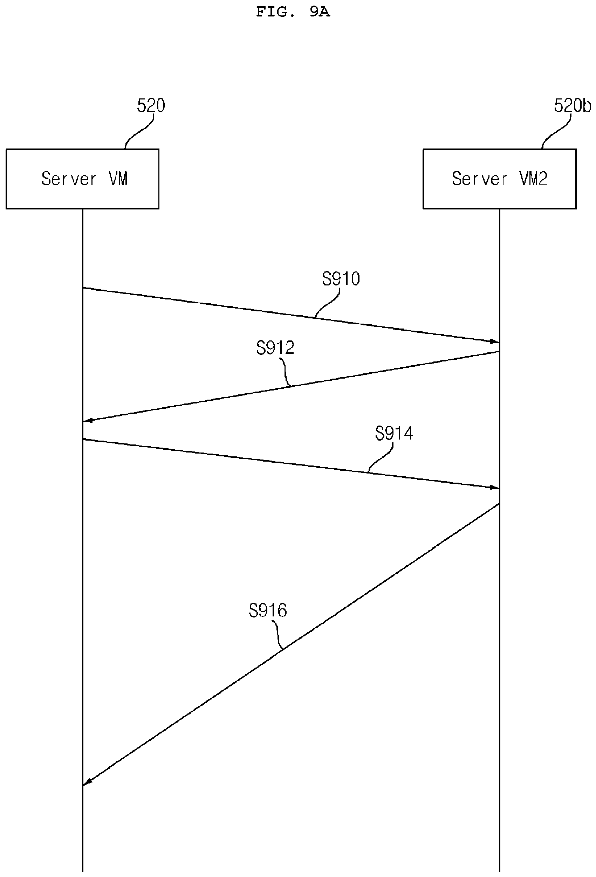

FIG. 8 is a flowchart showing an operation method of the display apparatus for vehicle according to the embodiment of the present disclosure, and FIGS. 9A to 19 are views referred to in the description of FIG. 8.

First, referring to FIG. 8, the signal processing device 170 may check the second signal processing device 170b (S810).

For example, the first virtual machine 520 in the processor 175 in the signal processing device 170 may check the second signal processing device 170b.

The signal processing device 170 and the second signal processing device 170b may be connected to each other in a wired or wireless manner.

For example, in response to connection being performed in a wired manner, an interface scheme between the signal processing device 170 and the second signal processing device 170b may be a high-speed interface scheme, such as Ethernet, CCIX based on USB or PCI express (PCIe), NvLink, or CXL.

Subsequently, the processor 175 in the signal processing device 170 may check an interface protocol of the second signal processing device 170b (S820).

For example, the first virtual machine 520 in the processor 175 in the signal processing device 170 may check an interface protocol of the second signal processing device 170b.

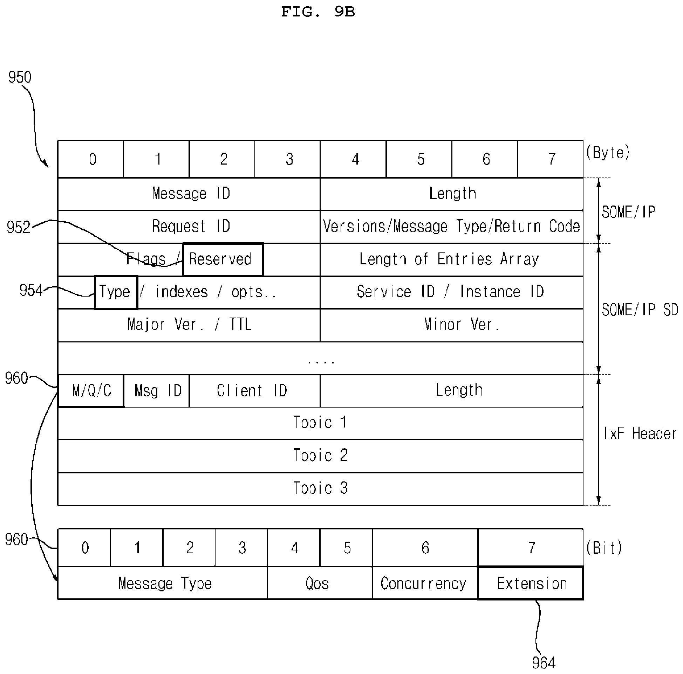

FIG. 9B is a view showing an example of an interface protocol 950 between the signal processing device 170 and the second signal processing device 170b.

Referring to the figure, the interface protocol 950, which is an SOA interworking protocol, may include SOME/IP, SOME/IPSD, and an interface header.

Meanwhile, in the embodiment of the present disclosure, reserved information 952 and type information 954 in the SOME/IPSD and an extension bit 964 in M/Q/C information 960 in the interface header may be utilized in order to check performance of the second signal processing device 170b.

For example, in response to the reserved information 952 being [0x00], this indicates Find Server VM. In response to the reserved information 952 being [0x01], this indicates Offer Server VM. In response to the reserved information 952 being [0x02], this indicates Request capability. In response to the reserved information 952 being [0x03], this indicates Request capability ACK.

Meanwhile, in response to the type information 954 being [0x00], this indicates Find Service. In response to the type information 954 being [0x01], this indicates Offer Service. In response to the type information 954 being [0x02], this indicates Request Service. In response to the type information 954 being [0x03], this indicates Request Service ACK. In response to the type information 954 being [0x04], this indicates Find Event group. In response to the type information 954 being [0x05], this indicates Publish Event group. In response to the type information 954 being [0x06], this indicates Subscribe Event group. In response to the type information 954 being [0x07], this indicates Subscribe Event group ACK.

Meanwhile, in response to the extension bit 964 being [0x00], this indicates only IxF. In response to the extension bit 964 being [0x01], this indicates IxF with SOME/IP.

Meanwhile, the first virtual machine 520 in the processor 175 in the signal processing device 170 may determine whether a virtual machine is present in the second signal processing device 170b and the virtual machine is driven through the received interface protocol 950 (S825).

Upon determining that a virtual machine is present in the second signal processing device 170b (S825), the first virtual machine 520 in the processor 175 in the signal processing device 170 may check capability information or resource information of the virtual machine in the second signal processing device 170b (S830).

For example, the second signal processing device 170b may transmit capability information or resource information of the virtual machine in the second signal processing device 170b to the signal processing device 170.

Subsequently, the first virtual machine 520 in the processor 175 in the signal processing device 170 may determine one of the signal processing device 170 and the second signal processing device 170b to be a master signal processing device based on the received capability information or resource information of the virtual machine in the second signal processing device 170b (S835).

For example, in response to the capability information of the virtual machine in the second signal processing device 170b being lower in level than the capability information of the virtual machine in the signal processing device 170, the signal processing device 170 may be determined to be a master signal processing device.

As another example, in response to the capability information of the virtual machine in the second signal processing device 170b being higher in level than the capability information of the virtual machine in the signal processing device 170, the second signal processing device 170b may be determined to be a master signal processing device.

As yet another example, in response to available resource information of the virtual machine in the second signal processing device 170b being lower in level than available resource information of the virtual machine in the signal processing device 170, the signal processing device 170 may be determined to be a master signal processing device.

As a further example, in response to the available resource information of the virtual machine in the second signal processing device 170b being higher in level than the available resource information of the virtual machine in the signal processing device 170, the second signal processing device 170b may be determined to be a master signal processing device.

Meanwhile, the first virtual machine 520 in the processor 175 may check whether the server virtual machine 520b in the second signal processing device 170b is driven based on protocol information received from the outside, and, in response to the server virtual machine 520b in the second signal processing device 170b being not driven, may be configured to operate the signal processing device 170 as a master signal processing device 170. Consequently, any one of the plurality of signal processing devices 170 and 170b may be set as a master signal processing device, whereby data processing may be efficiently performed.

Subsequently, in response to the signal processing device 170 being a master signal processing device (S840), the first virtual machine 520 in the processor 175 in the signal processing device 170 shares at least some of data with the second signal processing device 170b (S845).

Consequently, the plurality of signal processing devices 170 and 170b for the plurality of displays in the vehicle may divide and process data. In addition, the plurality of signal processing devices 170 and 170b may efficiently manage resources.

Meanwhile, the first virtual machine 520 in the processor 175 in the signal processing device 170 may acquire available resource information, such as CPU, GPU, and NPU, of the second signal processing device 170b, and may reallocate resources in the signal processing device 170 and the second signal processing device 170b.

For example, the first virtual machine 520 in the processor 175 in the signal processing device 170 may reallocate resources in the signal processing device 170 and the second signal processing device 170b such that the difference in level of the available information between the signal processing device 170 and the second signal processing device 170b is reduced. Consequently, the plurality of signal processing devices 170 and 170b may efficiently manage resources.

Meanwhile, the first virtual machine 520 in the processor 175 in the signal processing device 170 may check whether resources of the second signal processing device 170b are sharable based on the capability information or the resource information of the second signal processing device 170b, and, in response to the resources being sharable, may share at least some of processed data with the second signal processing device 170b. Consequently, the plurality of signal processing devices 170 and 170b may efficiently manage resources.

Meanwhile, the first virtual machine 520 in the processor 175 in the signal processing device 170 may check whether resources of the second signal processing device 170b are distributable or sharable, and, in response to the resources being distributable or sharable, may reallocate resources in the signal processing device 170 and the second signal processing device 170b. Consequently, the plurality of signal processing devices 170 and 170b may efficiently manage resources.

Meanwhile, the first virtual machine 520 in the processor 175 in the signal processing device 170 may check whether resources of the second signal processing device 170b are distributable or sharable, and, in response to the resources being not distributable or sharable, may reallocate resources in only the guest virtual machines 530 and 540 in the signal processing device 170. Consequently, the signal processing device 170, not the second signal processing device 170b, may efficiently manage resources.

FIG. 9A is a view illustrating exchange of capability information or resource information between the first virtual machine 520 in the signal processing device 170 and the server virtual machine 520b in the second signal processing device 170b.

Referring to the figure, the first virtual machine 520 in the processor 175 in the signal processing device 170 may set the reserved information 952 in the interface protocol 950 to [0x00] and may transmit the interface protocol 950 to the second signal processing device 170b (S910).

In response thereto, the server virtual machine 520b in the second signal processing device 170b may set the reserved information 952 in the interface protocol 950 to [0x01] and may transmit the interface protocol 950 to the signal processing device 170 (S912).

In response to the reserved information 952 in the received interface protocol 950 being [0x01], the first virtual machine 520 in the processor 175 in the signal processing device 170 may determine that a virtual machine is present in the second signal processing device 170b.

Meanwhile, in response to the reserved information 952 in the received interface protocol 950 being not [0x01] or the interface protocol 950 is not received, the first virtual machine 520 in the processor 175 in the signal processing device 170 may determine that no virtual machine is present in the second signal processing device 170b.

Subsequently, in order to check the capability information of the second signal processing device 170b, the first virtual machine 520 in the processor 175 in the signal processing device 170 may set the reserved information 952 in the interface protocol 950 to [0x02] and may transmit the interface protocol 950 to the second signal processing device 170b (S914).

In response thereto, in order to acknowledge reception of the capability information, the server virtual machine 520b in the second signal processing device 170b may set the reserved information 952 in the interface protocol 950 to [0x03] and may transmit the interface protocol 950 to the signal processing device 170 (S916).

The first virtual machine 520 in the processor 175 in the signal processing device 170 may check the capability information or the resource information of the server virtual machine 520b in the second signal processing device 170b based on the reserved information 952 in the received interface protocol 950.

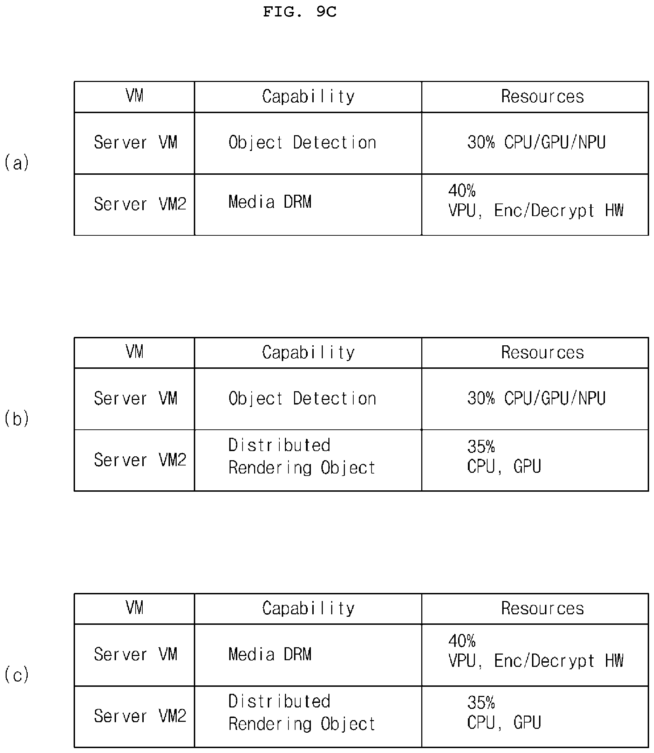

FIG. 9C is a view illustrating various kinds of capability information and resource information of the first virtual machine 520 in the processor 175 in the signal processing device 170 and the server virtual machine 520b in the second signal processing device 170b.

Referring to the figure, FIG. 9C(a) illustrates that the capability information of the first virtual machine 520 in the processor 175 in the signal processing device 170 is object detection and 30% of resources are used, and illustrates that the capability information of the server virtual machine 520b in the second signal processing device 170b is media digital rights management (DRM) and 40% of resources are used.

FIG. 9C(b) illustrates that the capability information of the first virtual machine 520 in the processor 175 in the signal processing device 170 is object detection and 30% of resources are used, and illustrates that the capability information of the server virtual machine 520b in the second signal processing device 170b is distributed object rendering and 35% of resources are used.

FIG. 9C(c) illustrates that the capability information of the first virtual machine 520 in the processor 175 in the signal processing device 170 is media digital rights management (DRM) and 40% of resources are used, and illustrates that the capability information of the server virtual machine 520b in the second signal processing device 170b is distributed object rendering and 35% of resources are used.

Meanwhile, the first virtual machine 520 in the processor 175 in the signal processing device 170 determines one of the signal processing device 170 and the second signal processing device 170b to be a master signal processing device based on various kinds of capability information or resource information, as shown in FIG. 9C. Consequently, the signal processing device 170 and the second signal processing device 170b may be efficiently operated.

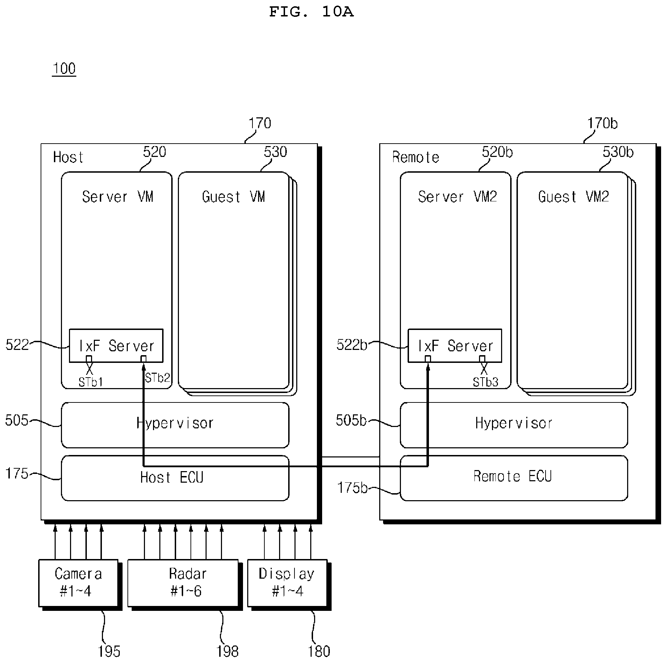

FIG. 10A is a view showing the case in which no deserializer network 1000 is present in the display apparatus 100 for vehicle.

Referring to the figure, the signal processing device 170 in the display apparatus 100 for vehicle may receive an image signal, a sensing signal, and an image signal from a camera 195, a radar 198, and a display 180, respectively, not via the deserializer network 1000.

In particular, the first virtual machine 520 in the processor 175 in the signal processing device 170 may receive image data, sensing data, and image data from the camera 195, the radar 198, and the display 180, respectively.

Meanwhile, in response to the signal processing device 170 being a master signal processing device, the input and output server interface 522 in the first virtual machine 520 may transmit at least some of the image data, the sensing data, and the image data to the input and output server interface 522b in the server virtual machine 520b in the second signal processing device 170b for data processing or data sharing (STb2).

Consequently, the plurality of signal processing devices 170 and 170b may efficiently perform data processing.

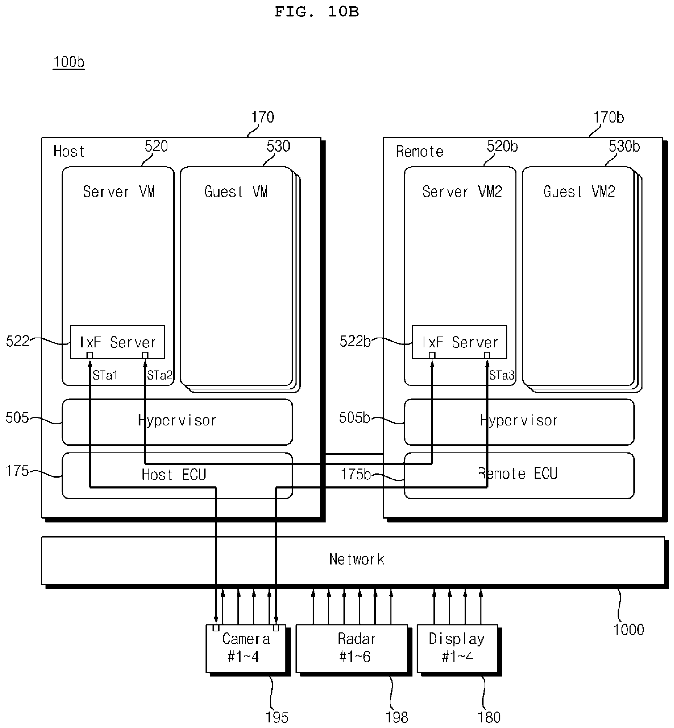

FIG. 10B is a view showing the case in which a deserializer network 1000 is present in a display apparatus 100b for vehicle.

The deserializer network may mean a network configured to allow the plurality of signal processing devices 170 and 170b to perform data input and output with the camera 195, the radar 198, and the display 180 in public.

Referring to the figure, the signal processing device 170 in the display apparatus 100b for vehicle may receive an image signal, a sensing signal, and an image signal from the camera 195, the radar 198, and the display 180, respectively, or may transmit signals to the camera 195, the radar 198, and the display 180, respectively, via the deserializer network 1000 (STa1).

In particular, the first virtual machine 520 in the processor 175 in the signal processing device 170 may receive image data, sensing data, and image data from the camera 195, the radar 198, and the display 180, respectively, or may transmit signals to the camera 195, the radar 198, and the display 180, respectively, via the deserializer network 1000.

Meanwhile, in response to the signal processing device 170 being a master signal processing device, the input and output server interface 522 in the first virtual machine 520 may transmit at least some of the image data, the sensing data, and the image data to the input and output server interface 522b in the server virtual machine 520b in the second signal processing device 170b for data processing or data sharing (STa2).

Meanwhile, in response to the signal processing device 170 being a master signal processing device, the first virtual machine 520 in the processor 175 may check whether to access the deserializer network 1000.

Subsequently, the first virtual machine 520 in the processor 175 may transmit an access message for access to the deserializer network 1000 to the second signal processing device 170b, and, in response to no access allowance message for access to the deserializer network 1000 being received from the second signal processing device 170b, may be configured to operate the signal processing device 170 as a master signal processing device 170. Consequently, any one of the plurality of signal processing devices 170 and 170b may be set as a master signal processing device, whereby data processing may be efficiently performed.

Meanwhile, the first virtual machine 520 in the processor 175 may transmit an access message for access to the deserializer network 1000 to the second signal processing device 170b, and, in response to an access allowance message for access to the deserializer network 1000 being received from the second signal processing device 170b, may be configured to operate any one of the second signal processing device 170b and the signal processing device 170 as a master signal processing device 170 based on the capability information or the resource information of the second signal processing device 170b. Consequently, any one of the plurality of signal processing devices 170 and 170b may be set as a master signal processing device, whereby data processing may be efficiently performed.

Meanwhile, in response to the second signal processing device 170b being a master signal processing device, the input and output server interface 522b in the server virtual machine 520b may receive image data, sensing data, and image data from the camera 195, the radar 198, and the display 180, respectively, via the deserializer network 1000 (STa3).

Meanwhile, in response to the second signal processing device 170b being a master signal processing device, the input and output server interface 522b in the server virtual machine 520b may transmit at least some of the image data, the sensing data, and the image data to the input and output server interface 522 in the server virtual machine 520 in the signal processing device 170 for data processing or data sharing (STb2). Consequently, any one of the plurality of signal processing devices 170 and 170b may be set as a master signal processing device, whereby data processing may be efficiently performed.

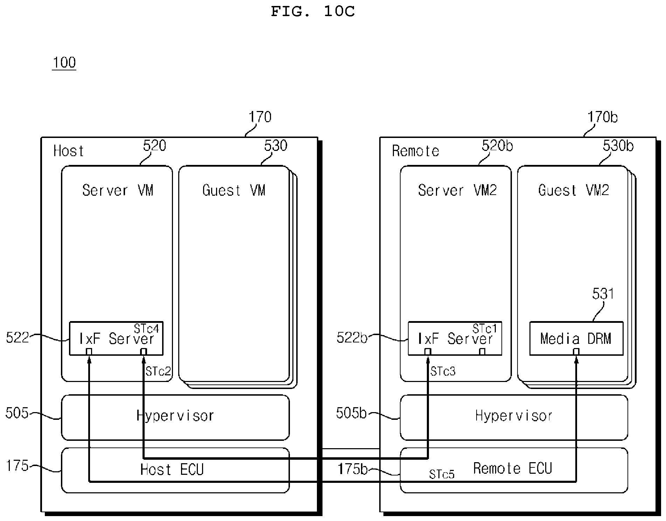

Meanwhile, the first virtual machine 520 in the processor 175 may receive capability information or resource information of the plurality of virtual machines driven in the second signal processing device 170b, and may control any one of the plurality of virtual machines driven in the second signal processing device 170b based on the capability information or resource information of the plurality of virtual machines. Consequently, the plurality of signal processing devices 170 and 170b may efficiently perform data processing. This will be described with reference to FIG. 10C.

FIG. 10C is a view illustrating that, in response to no deserializer network 1000 being present in the display apparatus 100 for vehicle, the guest virtual machine 530b in the second signal processing device 170b is controlled.

Referring to the figure, each of the signal processing device 170 and the second signal processing device 170b in the display apparatus 100 for vehicle collects capability information or resource information of the virtual machine (STc1).

Meanwhile, the input and output server interface 522 in the first virtual machine 520 in the signal processing device 170 transmits a capability information request message to the input and output server interface 522b in the server virtual machine 520b in the second signal processing device 170b (STc2).

In response thereto, the input and output server interface 522b in the server virtual machine 520b in the second signal processing device 170b transmits a capability information message to the input and output server interface 522 in the first virtual machine 520 in the signal processing device 170 (STc3).

At this time, the capability information message may include capability information of the server virtual machine 520b and capability information of the guest virtual machine 530b in the second signal processing device 170b.

Meanwhile, the first virtual machine 520 in the signal processing device 170 determines whether at least one of the plurality of virtual machines in the second signal processing device 170b is directly controllable based on the received capability information message (STc4).

In response to at least one of the plurality of virtual machines in the second signal processing device 170b being is directly controllable, the first virtual machine 520 in the signal processing device 170 may directly control the virtual machine.

The figure illustrates that the first virtual machine 520 in the signal processing device 170 directly controls the guest virtual machine 530b, which is one of the plurality of virtual machines in the second signal processing device 170b.

For example, the first virtual machine 520 in the signal processing device 170 may directly control media DRM executed by the guest virtual machine 530b in the second signal processing device 170b. Consequently, data processing may be efficiently performed.

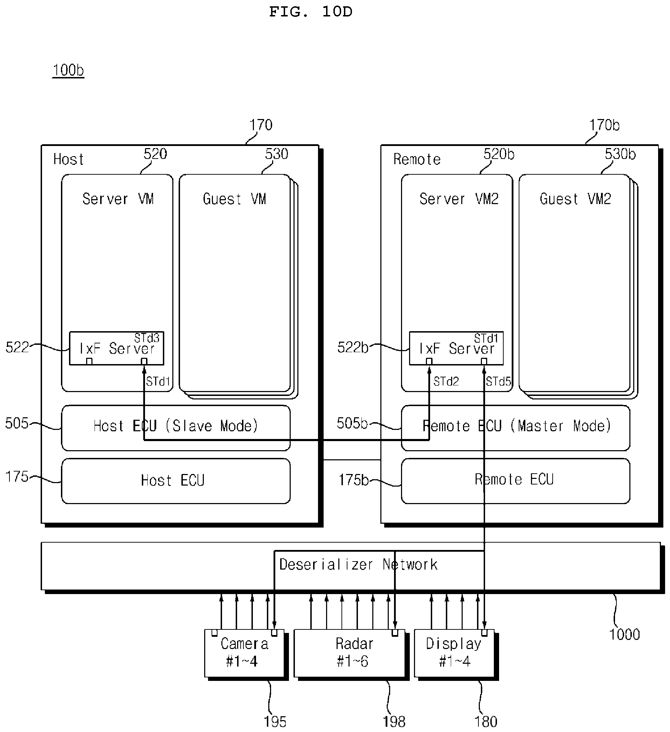

FIG. 10D is a view illustrating that, in response to the deserializer network 1000 being present in the display apparatus 100 for vehicle, the guest virtual machine 530b in the second signal processing device 170b is controlled.

Referring to the figure, the signal processing device 170 in the display apparatus 100 for vehicle may transmit a master authority transfer message to the second signal processing device 170b (STd1).

The master authority transfer message may include a command including a mode for each signal processing device, information regarding an application that is executed, or a parameter.

Specifically, the input and output server interface 522 in the first virtual machine 520 in the signal processing device 170 may transmit the master authority transfer message to the input and output server interface 522b in the server virtual machine 520b in the second signal processing device 170b.

In response thereto, the input and output server interface 522b in the server virtual machine 520b in the second signal processing device 170b transmits an acknowledgement (ACK) message to the input and output server interface 522 in the first virtual machine 520 in the signal processing device 170 (STd2).

As a result, the signal processing device 170 is operated in a slave mode (STd3). In addition, the second signal processing device 170b is operated in a master mode (STd4).

The second signal processing device 170b may receive various data through the deserializer network 1000 depending on the master mode.

For example, the input and output server interface 522b in the server virtual machine 520b may receive image data, sensing data, and image data from the camera 195, the radar 198, and the display 180, respectively, via the deserializer network 1000.

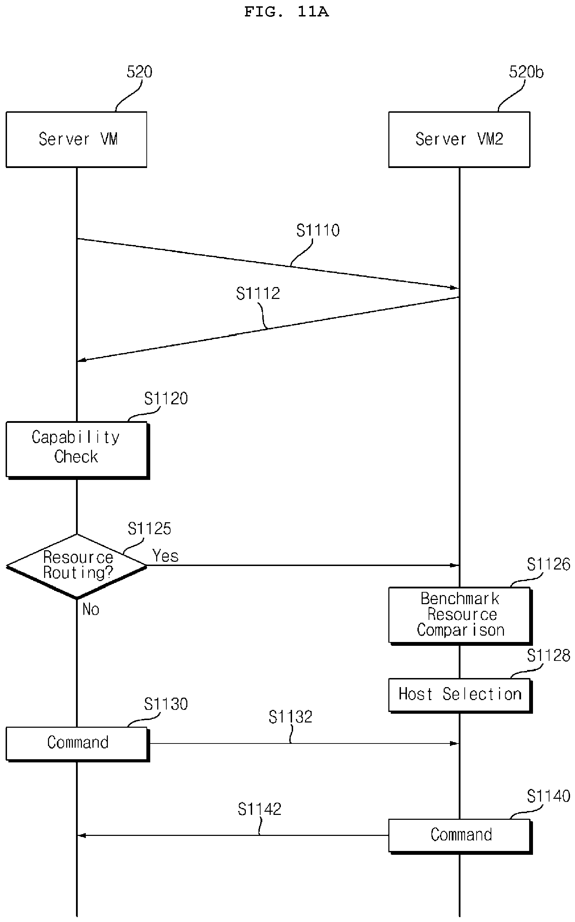

FIG. 11A is a view illustrating exchange of capability information or resource information between the first virtual machine 520 in the signal processing device 170 and the server virtual machine 520b in the second signal processing device 170b.

Referring to the figure, the first virtual machine 520 in the processor 175 in the signal processing device 170 may set the reserved information 952 in the interface protocol 950 to [0x00] and may transmit the interface protocol 950 to the second signal processing device 170b (S1110).

In response thereto, the server virtual machine 520b in the second signal processing device 170b may set the reserved information 952 in the interface protocol 950 to [0x01] and may transmit the interface protocol 950 to the signal processing device 170 (S1112).

In response to the reserved information 952 in the received interface protocol 950 being [0x01], the first virtual machine 520 in the processor 175 in the signal processing device 170 may determine that a virtual machine is present in the second signal processing device 170b.

Meanwhile, the first virtual machine 520 in the processor 175 in the signal processing device 170 checks capability information of the second signal processing device 170b (S1120).

Subsequently, the first virtual machine 520 in the processor 175 in the signal processing device 170 checks whether resource routing of the second signal processing device 170b is possible (S1125).

To this end, the reserved information 952 in the interface protocol 950 may be set to [0x02] and then the interface protocol 950 may be transmitted to the second signal processing device 170b.

In response thereto, in order to acknowledge reception of the capability information, the server virtual machine 520b in the second signal processing device 170b may set the reserved information 952 in the interface protocol 950 to [0x03] and may transmit the interface protocol 950 to the signal processing device 170.

The first virtual machine 520 in the processor 175 in the signal processing device 170 may check the capability information or the resource information of the server virtual machine 520b in the second signal processing device 170b based on the reserved information 952 in the received interface protocol 950.

For example, in response to the capability information of the server virtual machine 520b in the second signal processing device 170b being higher in level than the capability information of the first virtual machine 520 in the processor 175 in the signal processing device 170, the server virtual machine 520b in the second signal processing device 170b may be operated in a master mode.

Meanwhile, the server virtual machine 520b in the second processor 175b in the second signal processing device 170b may compare the received capability information or resource information of the first virtual machine 520 in the signal processing device with the capability information or resource information of the server virtual machine (S1126). Subsequently, a master device may be selected based thereon (S1128).

For example, in response to the capability information or available resource information of the server virtual machine 520b in the second processor 175b in the second signal processing device 170b being higher in level than the capability information or available resource information of the first virtual machine 520 in the processor 175 in the signal processing device 170, the server virtual machine 520b in the second signal processing device 170b may be operated in a master mode.

Meanwhile, in response to being set to a master device, the first virtual machine 520 in the processor 175 in the signal processing device 170 may transmit a command to the server virtual machine 520b in the second signal processing device 170b (S1130). In response thereto, the server virtual machine 520b in the second signal processing device 170b may receive the command (S1132).

The server virtual machine 520b in the second signal processing device 170b may share data, and may perform signal processing on the shared data. Consequently, data processing may be efficiently performed.

Meanwhile, in response to being set to a master device, the server virtual machine 520b in the second signal processing device 170b may transmit a command to the first virtual machine 520 in the signal processing device 170 (S1140). In response thereto, the first virtual machine 520 in the signal processing device 170 may receive the command (S1142).

The first virtual machine 520 in the signal processing device 170 may share data, and may perform signal processing for the shared data. Consequently, data processing may be efficiently performed.

Meanwhile, unlike the figure, the first virtual machine 520 in the processor 175 may transmit an authority transfer message to the server virtual machine 520b in the second processor 175b during operation of the signal processing device 170 as a master signal processing device 170, and, upon receiving an acknowledgement message from the server virtual machine 520b in the second processor 175b, may be configured to change the second signal processing device 170b to a master signal processing device 170. Consequently, any one of the plurality of signal processing devices 170 and 170b may be set as a master signal processing device, whereby data processing may be efficiently performed.

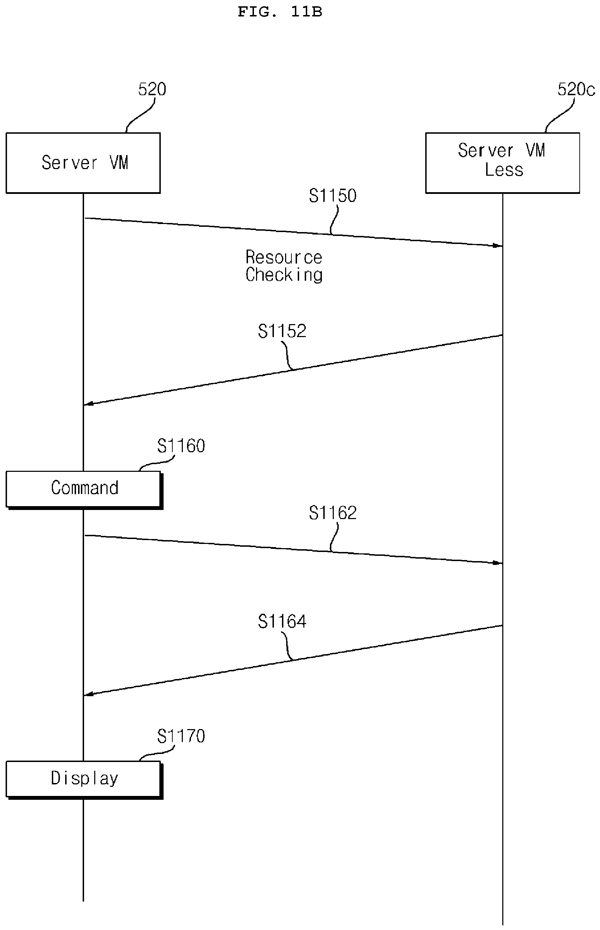

FIG. 11B is a view illustrating exchange of resource information between the first virtual machine 520 in the signal processing device 170 and the second signal processing device 170b having no server virtual machine 520c and resource sharing based thereon.

Referring to the figure, the first virtual machine 520 in the signal processing device 170 may check resources of the second signal processing device 170b (S1150).

Accordingly, the second signal processing device 170b may transmit resource information to the first virtual machine 520 in the signal processing device 170 (S1152).

Meanwhile, the first virtual machine 520 in the signal processing device 170 is operated as a master device, since there is no server virtual machine 520c in the second signal processing device 170b.

Subsequently, the first virtual machine 520 in the signal processing device 170 may request distributed processing of data based on the received resource information (S1162).

In response thereto, the second signal processing device 170b may perform distributed processing of data, and may transmit result information thereabout to the first virtual machine 520 in the signal processing device 170 (S1164).

The first virtual machine 520 in the signal processing device 170 may be configured to displaythe results of distributed processing of data on the displays 180a and 180b (S1170). Consequently, the plurality of signal processing devices 170 and 170b may efficiently perform data processing.

For example, in response to distributed processing of data being distributed processing of data for object detection of camera image data, result data of object detection may be displayed on the displays 180a and 180b based on the result of object detection partially processed by the second signal processing device 170b.

As another example, in response to distributed processing of data being media DRM processing, data of media DRM processing may be displayed on the displays 180a and 180b based on the result of media DRM processing partially processed by the second signal processing device 170b.

FIG. 12 is a view referred to in order to describe data sharing in the display apparatus 100 for vehicle.

Referring to the figure, in order to transmit shared data, the input and output server interface 522 in the first virtual machine 520 in the signal processing device 170 transmits a request for allocation of the shared memory 508 to the security manager 526 (STe1).

Subsequently, the security manager 526 may allocate the shared memory 508 using the hypervisor 505 (STe2), and may write shared data in the shared memory 508.

Meanwhile, the input and output server interface 522b in the server virtual machine 520b in the second signal processing device 170b may transmit a request for connection to the input and output server interface 522 after allocation of the shared memory 508 (STe3).

Meanwhile, the input and output server interface 522 transmits information regarding the shared memory 508 including key data to the input and output server interface 522b in the server virtual machine 520b in the second signal processing device 170b after allocation of the shared memory 508 (STe4). At this time, the key data may be private key data.

Subsequently, the input and output server interface 522b in the server virtual machine 520b in the second signal processing device 170b transmits a request for allocation of the second shared memory 508b to the security manager 526 based on the received key data (STe5).

Subsequently, the security manager 526 may allocate the second shared memory 508b using the hypervisor 505b (STe6), and may write shared data in the second shared memory 508b (STe7).

In addition, the input and output server interface 522b in the server virtual machine 520b in the second signal processing device 170b may request data from the input and output server interface 522 for writing of data in the second shared memory 508b.

Meanwhile, the plurality of guest virtual machines 530b and 540b in the second signal processing device 170b may perform signal processing using the data in the second shared memory 508b.

Consequently, the plurality of signal processing devices 170 and 170b may divide and process data. In addition, the plurality of signal processing devices 170 and 170b may efficiently manage resources.

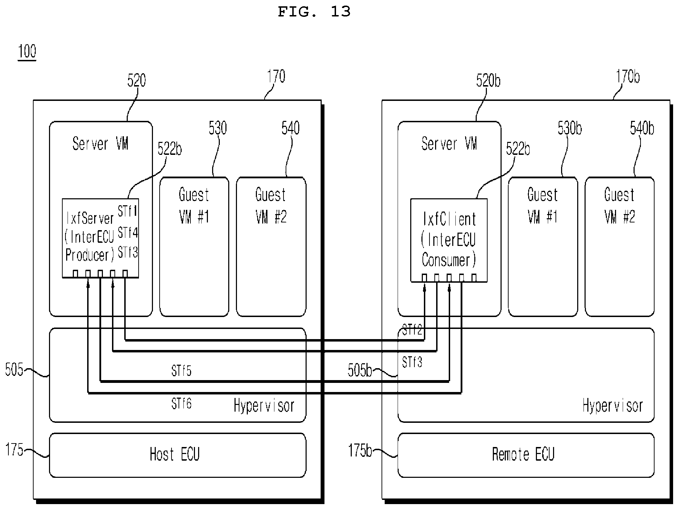

FIG. 13 is a view referred to in order to describe setting of a master signal processing device between the signal processing device and the second signal processing device in the display apparatus 100 for vehicle.

Referring to the figure, after a booting sequence is completed, the first virtual machine 520 in the signal processing device 170 and the server virtual machine 520b in the second signal processing device 170b execute a benchmark program and store capability scores of the processors 175 and 175b (STf1).

Specifically, it is possible to check capability scores of the first virtual machine 520 and the server virtual machine 520b.

Subsequently, the first virtual machine 520 in the signal processing device 170 attempts to access the server virtual machine 520b in the second signal processing device 170b (STf2).

In response to access being accomplished, the server virtual machine 520b in the second signal processing device 170b transmits state information, such as a benchmark score and current usage of CPU/RAM/GPU resources, to the first virtual machine 520 in the signal processing device 170 as a result message (STf3).

Subsequently, the first virtual machine 520 in the signal processing device 170 checks the result message of the server virtual machine 520b in the second signal processing device 170b, and determines any one of the signal processing device 170 and the second signal processing device 170b to be a master device (STf4).

Meanwhile, any one of the signal processing device and the second signal processing device may be determined to be a master device based on an available capability score that is inversely proportional to usage.

For example, in response to the difference in available capability score between the first virtual machine 520 in the signal processing device 170 and the server virtual machine 520b in the second signal processing device 170b being a first reference value (e.g. 10%) or less, the first virtual machine 520 in the signal processing device 170 may have master authority.

As another example, in response to the difference in available capability score between the first virtual machine 520 in the signal processing device 170 and the server virtual machine 520b in the second signal processing device 170b being between the first reference value and a second reference value (e.g. 10% to 70%), a signal processing device having a high available capability score may have master authority, and a signal processing device having a low available capability score may be operated as a slave.

As another example, in response to the available capability score of the server virtual machine 520b in the second signal processing device 170b being higher than the available capability score of the first virtual machine 520 in the signal processing device 170 by the second reference value (e.g. 70%) or more, the server virtual machine 520b in the second signal processing device 170b may have master authority. Consequently, all computations may be performed by the server virtual machine 520b in the second signal processing device 170b.

As another example, in response to the available capability score of the first virtual machine 520 in the signal processing device 170 being higher than the available capability score of the server virtual machine 520b in the second signal processing device 170b by the second reference value (e.g. 70%) or more, the first virtual machine 520 in the signal processing device 170 may finish connection with the server virtual machine 520b in the second signal processing device 170b, and may not perform distributed processing.

Meanwhile, the first virtual machine 520 in the signal processing device 170 transmits the result of calculation of operation scheme between the first virtual machine 520 in the signal processing device 170 and the server virtual machine 520b in the second signal processing device 170b to the server virtual machine 520b in the second signal processing device 170b (STf5).

Subsequently, the server virtual machine 520b in the second signal processing device 170b transmits an acknowledgement (ACK) message for the result message to the first virtual machine 520 in the signal processing device 170 (STf6).

Subsequently, the first virtual machine 520 in the signal processing device 170 and the server virtual machine 520b in the second signal processing device 170b change operation modes based on the result of calculation of operation scheme (STf7).

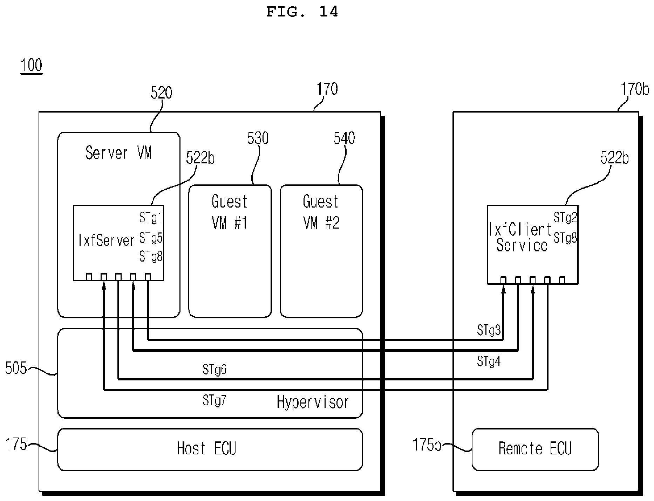

FIG. 14 is a view referred to in order to describe setting of a master signal processing device between the signal processing device and the second signal processing device in the display apparatus 100 for vehicle.

Referring to the figure, FIG. 14 is similar to FIG. 13 except that the server virtual machine 520b is not driven in the second signal processing device 170b.

First, after a booting sequence is completed, the first virtual machine 520 in the signal processing device 170 executes a benchmark program and stores a capability score of the processor 175 (STg1).

Subsequently, the input and output server interface 522b in the second signal processing device 170b executes a benchmark program and stores a capability score of the second processor 175b (STg2).

Subsequently, the first virtual machine 520 in the signal processing device 170 attempts to access the second signal processing device 170b (STg3).

In response to access being accomplished, the second signal processing device 170b transmits state information, such as a benchmark score and current usage of CPU/RAM/GPU resources, to the first virtual machine 520 in the signal processing device 170 as a result message (STg4).

Subsequently, the first virtual machine 520 in the signal processing device 170 checks the result message of the second signal processing device 170b, and determines any one of the signal processing device 170 and the second signal processing device 170b to be a master device (STg5).

Meanwhile, any one of the signal processing device and the second signal processing device may be determined to be a master device based on an available capability score that is inversely proportional to usage.

For example, in response to the difference in available capability score between the first virtual machine 520 in the signal processing device 170 and the second signal processing device 170b being a first reference value (e.g. 10%) or less, the first virtual machine 520 in the signal processing device 170 may have master authority.

As another example, in response to the difference in available capability score between the first virtual machine 520 in the signal processing device 170 and the second signal processing device 170b being between the first reference value and a second reference value (e.g. 10% to 70%), a signal processing device having a high available capability score may have master authority, and a signal processing device having a low available capability score may be operated as a slave.

As another example, in response to the available capability score of the second signal processing device 170b being higher than the available capability score of the first virtual machine 520 in the signal processing device 170 by the second reference value (e.g. 70%) or more, the second signal processing device 170b may have master authority. Consequently, all computations may be performed by the second signal processing device 170b.

As another example, in response to the available capability score of the first virtual machine 520 in the signal processing device 170 being higher than the available capability score of in the second signal processing device 170b by the second reference value (e.g. 70%) or more, the first virtual machine 520 in the signal processing device 170 may finish connection with the second signal processing device 170b, and may not perform distributed processing.

Meanwhile, the first virtual machine 520 in the signal processing device 170 transmits the result of calculation of operation scheme between the first virtual machine 520 in the signal processing device 170 and the second signal processing device 170b to the second signal processing device 170b (STg6).

Subsequently, the input and output server interface 522b in the second signal processing device 170b transmits an acknowledgement (ACK) message for the result message to the first virtual machine 520 in the signal processing device 170 (STg7).

Subsequently, the first virtual machine 520 in the signal processing device 170 and the second signal processing device 170b change operation modes based on the result of calculation of operation scheme (STg8).

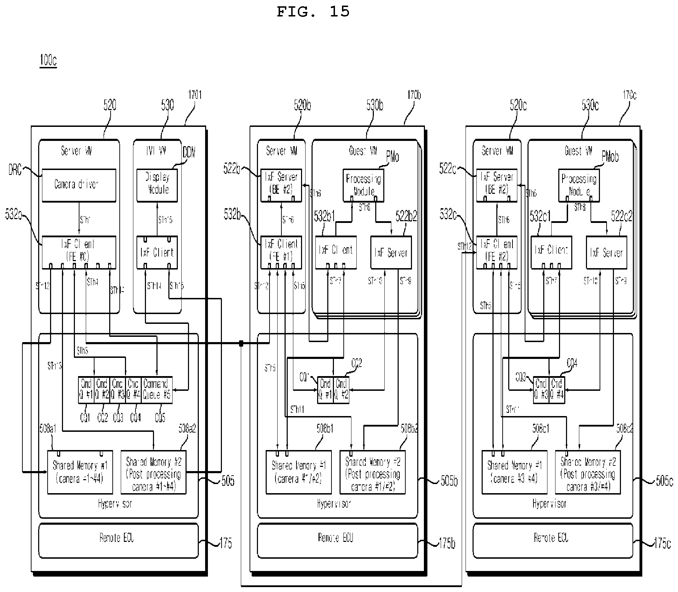

Meanwhile, the first virtual machine 520 in the processor 175 may create a command queue for distributed processing of data. This will be described with reference to FIG. 15 and subsequent figures.

FIG. 15 is a view referred to in order to describe that a plurality of signal processing devices in the display apparatus 100 for vehicle shares a memory.

Referring to the figure, the display apparatus 100 for vehicle may include the signal processing device 170, the second signal processing device 170b, and a third signal processing device 170c.

The signal processing device 170 may share data with the second signal processing device 170b and the third signal processing device 170c.

For example, the first virtual machine 520 in the processor 175 in the signal processing device 170 may include a camera driver DRc configured to process an image from a camera.

In addition, the first virtual machine 520 in the processor 175 in the signal processing device 170 may further include a position information driver (not shown) configured to process position information and a touch driver (not shown) configured to process touch input.

The first virtual machine 520 in the processor 175 in the signal processing device 170 may set a shared memory based on the hypervisor 505 for each driver.

The figure illustrates that the first virtual machine 520 in the processor 175 in the signal processing device 170 sets shared memories 508a1 and 508a2 using the hypervisor 505 for the camera driver DRc.

The shared memory 508a1 is a shared memory for image data from a plurality of camera devices, and the shared memory 508a2 is a shared memory for post-processing of the image data from the plurality of camera devices.

The input and output server interface 522 in the first virtual machine 520 may receive image data from the camera driver DRc (STh1).

Subsequently, the input and output server interface 522 in the first virtual machine 520 may be configured to write or update the received image data in the shared memory 508a1 (STh2).

Subsequently, the input and output server interface 522 in the first virtual machine 520 creates command queues corresponding to the number of guest virtual machines available in the second signal processing device 170b and the third signal processing device 170c (STh3).

That is, the first virtual machine 520 in the processor 175 may create command queues corresponding to the number of virtual machines for distributed processing of data in the second processor 175b or a third processor 175c.

For example, in response to the number of guest virtual machines available in the second signal processing device 170b being 2 and the number of guest virtual machines available in the third signal processing device 170c being 2, as shown in the figure, the input and output server interface 522 in the first virtual machine 520 is configured to create four command queues.

At this time, each command queue may include at least one of command type information, buffer ID information, or buffer address information.

Subsequently, the first virtual machine 520 in the signal processing device 170 may transmit camera-related image data and command queue data to the server virtual machine 520b in the second signal processing device 170b (STh4).

For example, the input and output server interface 522 in the first virtual machine 520 may transmit camera-related image data and command queue data to the input and output client interface 532b in the server virtual machine 520b.

Meanwhile, as shown in the figure, the transmitted camera-related image data may be image data related to first and second cameras, among image data related to first to fourth cameras.

Meanwhile, the input and output client interface 532b in the server virtual machine 520b may store the received camera-related image data and command queue data in a shared 508b1 (STh5).

Subsequently, the server virtual machine 520b in the second processor 175b in the second signal processing device 170b may inform the guest virtual machine 530b of reception of the camera-related image data (STh6).

Subsequently, an input and output client interface 532b1 in the guest virtual machine 530b in the second signal processing device 170b may read the data written in the shared 508b1 with reference to the received command queue (STh7).

Subsequently, a processing module PMb in the guest virtual machine 530b computes the read image data according to a command in the command queue (STh8).

For example, in response to the command in the command queue being object detection in the camera-related image data, the processing module PMb performs object detection for the read image data.

As another example, in response to the command in the command queue being DRM execution of the image data, the processing module PMb may perform DRM decryption of the read image data.

Subsequently, the guest virtual machine 530b in the second signal processing device 170b may write result data processed by the processing module PMb in a second shared memory 508b2 allocated for the input and output server interface 522 (STh9).

Subsequently, the guest virtual machine 530b in the second signal processing device 170b may inform the server virtual machine 520b of information related to the completion of writing the computation result in the second shared memory 508b2 through the command queue (STh10).

Subsequently, the server virtual machine 520b in the second processor 175b in the second signal processing device 170b reads processing result data written in the second shared memory 508b2 (STh11).

Subsequently, the server virtual machine 520b in the second processor 175b in the second signal processing device 170b may transmit the processing result data and the command queue data to the first virtual machine 520 in the processor 175 in the signal processing device 170 (STh12).

Subsequently, the first virtual machine 520 in the processor 175 in the signal processing device 170 may be configured to store the received processing result data in the shared memory 508a2 (STh13).

Subsequently, the first virtual machine 520 in the processor 175 in the signal processing device 170 may transmit a display command to the input and output client interface 532 in the second virtual machine 530 through a fifth command queue #5 (STh14).

Subsequently, the second virtual machine 530 may be configured to display a related image while reading the processing result data written in the second shared memory 508b (STh15).

Meanwhile, the steps performed by the second signal processing device 170b from step STh4 to step STh12 may be equally performed in the third signal processing device 170c.

That is, the first virtual machine 520 in the processor 175 in the signal processing device 170 may transmit image data related to third and fourth cameras, among image data related to first to fourth cameras, and command queue data to a server virtual machine 520c in the third signal processing device 170c, the server virtual machine 520c in the third signal processing device 170c may store the received image data in a shared memory 508c1, a guest virtual machine 530c may receive and process the stored image data and may store the processed result data in a shared memory 508c2, and the server virtual machine 520c in the third signal processing device 170c may transmit the result data stored in the shared memory 508c2 to the first virtual machine 520 in the processor 175 in the signal processing device 170.

Consequently, the signal processing device 170, the second signal processing device 170b, and the third signal processing device 170c may divide and efficiently process data.

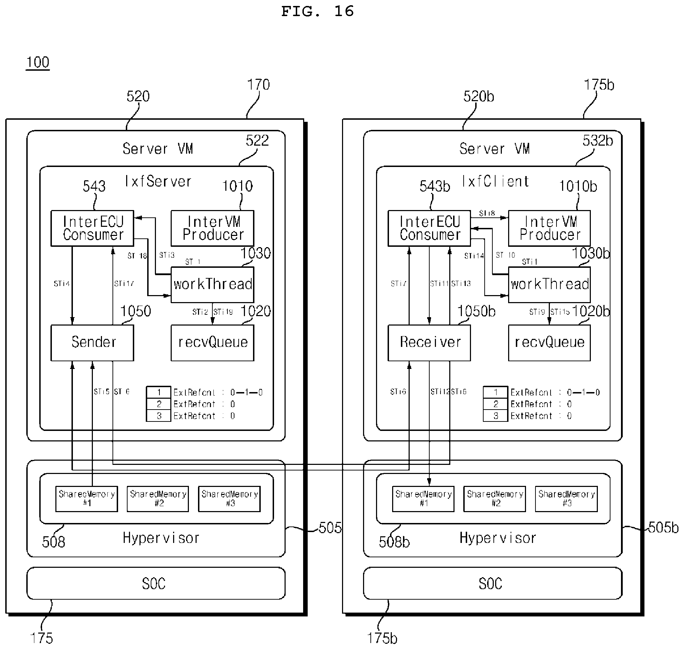

FIG. 16 is a view referred to in order to describe memory synchronization between the signal processing device 170 and the second signal processing device 170b.

Referring to the figure, the input and output server interface 522 in the first virtual machine 520 in the signal processing device 170 may include a consumer 543, a sender 1050, a producer 1010 configured to create a synchronization object for graphical synchronization, a recvQueue 1020 configured to manage, particularly receive, a queue, a WorkThread 1030 configured to manage a queue and to control operation of the queue, and a SendQueue 1040 configured to manage, particularly transmit, a queue.

Meanwhile, a plurality of buffers may be set in the shared memory 508 in the signal processing device 170.

The input and output client interface 532b in the server virtual machine 520b in the second signal processing device 170b may include a consumer 543b, a receiver 1050b, a producer 1010b configured to create a synchronization object for graphical synchronization, a recvQueue 1020b configured to manage, particularly receive, a queue, a WorkThread 1030b configured to manage a queue and to control operation of the queue, and a SendQueue 1040b configured to manage, particularly transmit, the queue.

Meanwhile, a plurality of buffers may be set in the shared memory 508b in the second signal processing device 170b.

First, the WorkThread 1030 in the first virtual machine 520 checks whether data in the shared memory 508 have been changed (STi1).

Subsequently, the recvQueue 1020 increases a reference count (Extrefcnt) of the shared memory 508 by 1 (STi2).

Meanwhile, while the reference count (Extrefcnt) is 1, writing in the shared memory 508 is impossible.

Subsequently, the WorkThread 1030 in the first virtual machine 520 transmits information regarding a buffer index to the consumer 543 (STi3).

Subsequently, the consumer 543 requests reading of the shared memory 508 from the sender 1050 (STi4).

Subsequently, the sender 1050 reads data from the shared memory 508 (STi5). In particular, the sender 1050 may read changed data from the shared memory 508 (STi5).

Subsequently, the sender 1050 may transmit the read data and the buffer index to the server virtual machine 520b in the second signal processing device 170b (STi6).

Subsequently, the input and output client interface 532b in the server virtual machine 520b in the second signal processing device 170b may receive the data from the signal processing device 170, and may notify the consumer 543 of the received information (STi7).

Subsequently, the consumer 543b may request access to the buffer index from the producer 1010b (STi8).

Subsequently, the recvQueue 1020b or the WorkThread 1030b increases a reference count (Extrefcnt) of the shared memory 508b by 1 (STi9).

Meanwhile, while the reference count (Extrefcnt) is 1, writing in the shared memory 508b is impossible.

Subsequently, the WorkThread 1030b in the server virtual machine 520b transmits information regarding a buffer index to the consumer 543b (STi10).

Subsequently, the consumer 543b requests writing to the shared memory 508b from the receiver 1050b (STi11).

Subsequently, the receiver 1050b writes received data in the shared memory 508b (ST112).

Subsequently, the receiver 1050b may transmit information indicating the completion of use of the shared memory 508b to the consumer 543b (ST113).

Subsequently, the consumer 543b may return the received buffer index to the WorkThread 1030b (ST114).

Subsequently, the recvQueue 1020b decreases the reference count (Extrefcnt) by 1 (ST115).

Subsequently, the receiver 1050b may transmit information indicating the completion of use of the shared memory 508b to the sender 1050 in the first virtual machine 520 in the signal processing device 170 (ST116).

Subsequently, the sender 1050 in the first virtual machine 520 in the signal processing device 170 may transmit information indicating the completion of use of the shared memory 508b to the consumer 543 (ST117).

Subsequently, the consumer 543 in the first virtual machine 520 in the signal processing device 170 may return the received buffer index to the WorkThread 1030b (ST118).

Subsequently, the recvQueue 1020 decreases the reference count (Extrefcnt) by 1 (ST119).

Subsequently, in response to the reference count (Extrefcnt) becoming 0, the shared memory 508 may be used by the producer 1010, etc. again.

Consequently, data in the shared memory 508 in the signal processing device 170 and data in the shared memory 508b in the second signal processing device 170b may be synchronized and copied. Eventually, synchronization may be performed at the time of data sharing between different signal processing devices.

Based on this data synchronization technology, an image displayed on the first display 180a controlled by the second virtual machine 530 in the signal processing device 170 and an image displayed on the third display 180c controlled by the guest virtual machine 530b in the second signal processing device 170b may be synchronized, whereby the same images may be displayed.

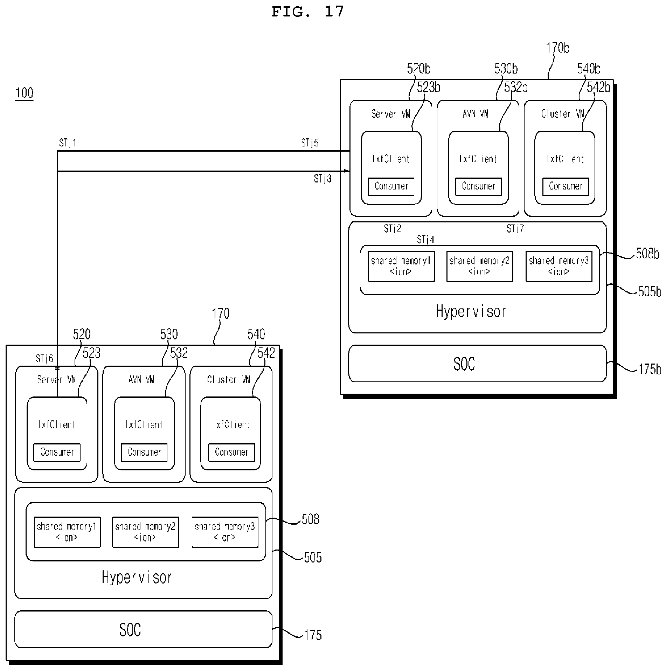

FIG. 17 is a view referred to in order to describe a rendering process between the signal processing device and the second signal processing device.

Referring to the figure, at the time of initializing the first virtual machine 520 in the processor 175 in the signal processing device 170, in response to the server virtual machine 520b in the second processor 175b in the second signal processing device 170b accessing the first virtual machine 520, the first virtual machine 520 may transmit information regarding the number of shared memories or the number of buffers of a shared memory to the server virtual machine 520b (STj1).

Subsequently, the server virtual machine 520b in the second signal processing device 170b creates a second shared memory 508b (STj2).

Subsequently, in response to the shared memory 508 being updated by the producer 1010 in the first virtual machine 520, the first virtual machine 520 may transmit shared memory ID or buffer ID and image stream data to the server virtual machine 520b (STj3) .

Subsequently, the server virtual machine 520b in the second signal processing device 170b may write the received image stream data in the second shared memory 508b based on the received shared memory ID or buffer ID (STj4).

Subsequently, in response to the reference count (Extrefcnt) for the second shared memory 508b becoming 0, the server virtual machine 520b in the second signal processing device 170b transmits information regarding the reference count (Extrefcnt) to the first virtual machine 520 in the processor 175 in the signal processing device 170 (STj4).

Consequently, the first virtual machine 520 in the processor 175 in the signal processing device 170 updates the reference count (Extrefcnt) for the shared memory 508 (STj5) .

Subsequently, the guest virtual machine 530b in the second signal processing device 170b signal-processes the image stream data stored in the second shared memory 508b using the second shared memory 508b, and is configured to render and display an image on the display.

Consequently, the image stream data signal-processed by the second signal processing device 170b are displayed on the third display 180c or the fourth display 180d.

In particular, an image signal-processed by the signal processing device 170 and displayed on the first display 180a or the second display 180b and an image displayed on the third display 180c or the fourth display 180d are displayed in a synchronized state.

Meanwhile, the first virtual machine 520 in the processor 175 may be configured to write camera data in the first shared memory 508a and may transmit some of the camera data to the second signal processing device 170b, the server virtual machine 520b in the second processor 175b may be configured to write the received some of the camera data in the second shared memory 508b, and the guest virtual machine 530b or 540b in the second processor 175b may process at least some of the data written in the second shared memory 508b and may be configured to write the processed data in the second shared memory 508b.

Meanwhile, the second virtual machine 530 in the processor 175 may be configured to display an image on the display based on the data written in the second shared memory 508b.

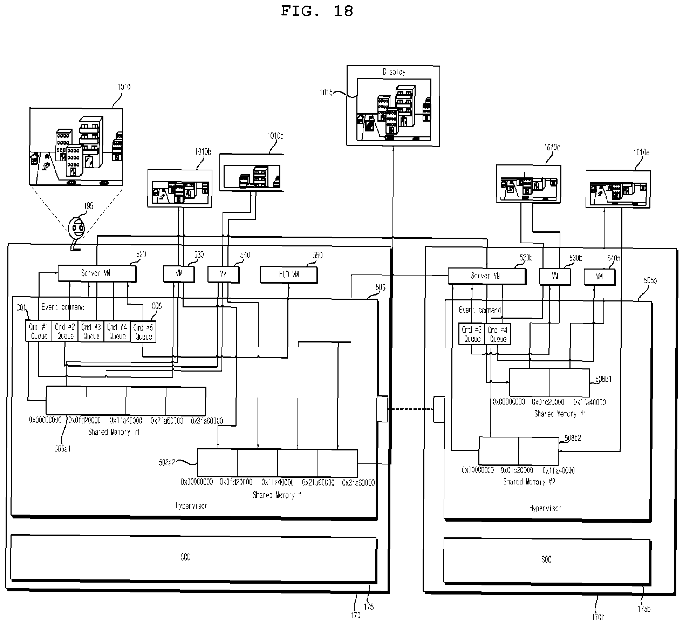

Meanwhile, the first virtual machine 520 in the processor 175 may write some of the camera data in the first shared memory 508a to be transmitted to the second processor 175b, and the guest virtual machine 530b or 540b in the second processor 175b may perform object detection for the received camera data and may be configured to write the data from which an object has been detected in the second shared memory 508b. This will be described in detail with reference to FIG. 18.

FIG. 18 illustrates that, in order to signal-process image data 1010 acquired through a camera 915, the signal processing device 170 and the second signal processing device 170b divide and process the image data.

First, in response to data being image data 1010, the first virtual machine 520 in the processor 175 in the signal processing device 170 may write some 1010b of the image data 1010 in a first buffer of the shared memory 508a1, and may write some other 1010c of the image data 1010 in a second buffer of the shared memory 508a1.

The second virtual machine 530 and the third virtual machine 540 may detect objects from the received image data 1010b and 1010c, and may be configured to write the image data from which the objects have been detected in the shared memory 508.

Specifically, the second virtual machine 530 may write data from which an object BG1 has been detected in the first buffer in the second shared memory 508a2, and the third virtual machine 540 may write data from which an object BG2 has been detected in the second buffer in the second shared memory 508a2.

Meanwhile, in response to the plurality of virtual machines 520b, 530b, and 540b being executed in the second signal processing device 170b, as shown in the figure, the first virtual machine 520 in the processor 175 may transmit some others 1010d and 1010e of the image data 1010 to the server virtual machine 520b driven by the second processor 175b in the second signal processing device 170b.

The server virtual machine 520b driven by the second processor 175b in the second signal processing device 170b may write the received some other 1010d of the image data 1010 in the first buffer in the second shared memory 508b2, and may write some other 1010e of the image data 1010 in the second buffer in the second shared memory 508b2.

The guest virtual machines 530b and 540b driven by the second processor 175b in the second signal processing device 170b may detect objects from the received image data 1010d and 1010e, and may be configured to write the image data from which the objects have been detected in the second shared memory 508b2.

Specifically, the first guest virtual machine 530b may write data from which an object BG3 has been detected in the first buffer in the second shared memory 508b2, and the second guest virtual machine 540b may write data from which an object BG4 has been detected in the second buffer in the second shared memory 508b2.

Meanwhile, the server virtual machine 520b driven by the second processor 175b in the second signal processing device 170b may transmit the data from which the object has been detected, written in the second shared memory 508b2, to the first virtual machine 520 in the processor 175 in the signal processing device 170.

Consequently, the first virtual machine 520 in the processor 175 in the signal processing device 170 may be configured to display a processed image 1015 on the display based on the image data from which the object has been detected.

At this time, the display may be at least one of the first and second displays 180a and 180b controlled by the signal processing device 170 or at least one of the third and fourth displays 180c and 180d controlled by the second signal processing device 170b.

Consequently, distributed processing of data may be efficiently performed through the signal processing device 170 and the second signal processing device 170b.

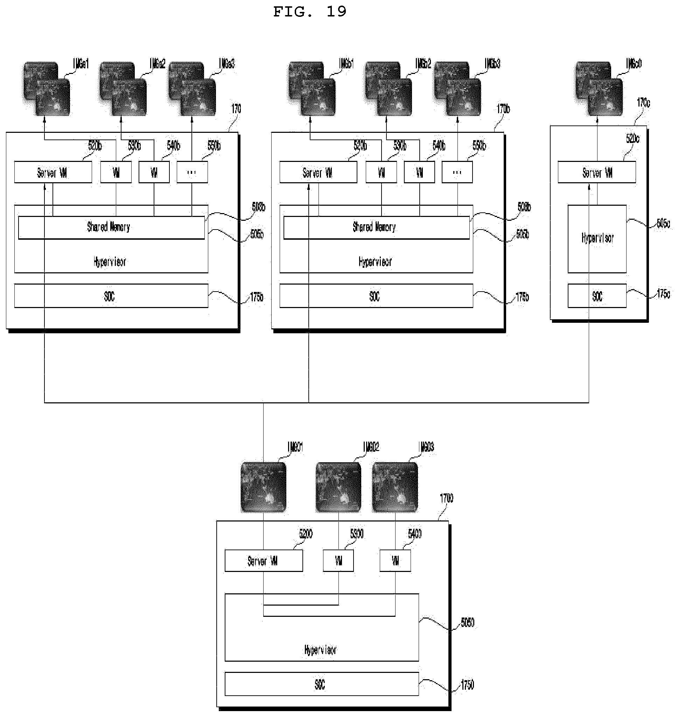

FIG. 19 is a view illustrating that image data processed by a main signal processing device 1700 is transmitted to the plurality of signal processing devices 170, 170b, and 170c and is displayed on the respectively displays.

The main signal processing device 1700 may be disposed in the display apparatus 100 for vehicle, or may be disposed in a separate remote server (not shown).

For example, the main signal processing device 1700 may be a signal processing device disposed in a server (not shown) in an airplane.

As another example, the main signal processing device 1700 may be a signal processing device disposed in another vehicle.

The main signal processing device 1700 may drive a hypervisor 505 on a processor 175 therein, and may drive a server virtual machine 5200 and guest virtual machines 5300 and 5400 on the hypervisor 505.

A plurality of images IMGO1, IMGO2, and IMGO3 processed by the main signal processing device 1700 through the server virtual machine 5200 and guest virtual machines 5300 and 5400, respectively, may be displayed through a plurality of displays connected to the main signal processing device 1700.

Meanwhile, image data processed by the main signal processing device 1700 may be synchronized, and may be transmitted to the plurality of signal processing devices 170, 170b, and 170c.

The plurality of signal processing devices 170, 170b, and 170c may process the image data received from the main signal processing device 1700 and may be configured to display images on the respective displays.

In the figure, hypervisors 505, 505b, and 505c may be driven on the processors 175, 175b, and 175c in the signal processing devices 170, 170b, and 170c, respectively, and server virtual machines 520, 520b, and 520c, first guest virtual machines 530, 530b, and 530c, and second guest virtual machines 540, 540b, and 540c may be driven on the hypervisors 505, 505b, and 505c, respectively.

The signal processing devices 170, 170b, and 170c may be configured to display processed images IMGa1, IMGa2, and IMGa3, processed images IMGb1, IMGb2, and IMGb3, and processed images IMGc1, IMGc2, and IMGc3 on the respectively displays in a synchronized state.

In particular, the main signal processing device 1700 and the signal processing devices 170, 170b, and 170c may display images in a synchronized state according to the synchronization scheme described with reference to FIGS. 8 to 18. Consequently, the same images may be simultaneously viewed.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A display apparatus for vehicle, the display apparatus comprising:
a first display and a second display located in a vehicle;
a signal processing device comprising a processor configured to perform signal processing for the first display and the second display; and
a second signal processing device comprising a second processor configured to perform signal processing for a third display, wherein
the processor in the signal processing device is configured to execute first to third virtual machines on a hypervisor in the processor, and
in response to the signal processing device being operated as a master signal processing device, the first virtual machine in the processor is configured to share at least some of data with the second signal processing device for divided processing of data.

2. The display apparatus of claim 1, wherein, in response to the second signal processing device being operated as a master signal processing device, a server virtual machine in the second processor is configured to share at least some of data with the signal processing device for divided processing of data.

3. The display apparatus of claim 1, wherein the first virtual machine in the processor is configured to check capability information or resource information of the second signal processing device, and operate any one of the second signal processing device and the signal processing device as a master signal processing device based on the capability information or the resource information of the second signal processing device.

4. The display apparatus of claim 1, wherein
the processor in the signal processing device is configured to execute the first to third virtual machines on the hypervisor in the processor,
the second virtual machine is operated for the first display, and
the third virtual machine is operated for the second display.

5. The display apparatus of claim 4, wherein the first virtual machine in the processor receives and processes wheel speed sensor data of the vehicle, and transmits the processed wheel speed sensor data to at least one of the second virtual machine or at least one of the second virtual machine or the third virtual machine, or the second signal processing device.

6. The display apparatus of claim 3, wherein the first virtual machine in the processor transmits an access message for access to a deserializer network to the second signal processing device, and, in response to no access allowance message for access to the deserializer network being received from the second signal processing device, is configured to operate the signal processing device as the master signal processing device.

7. The display apparatus of claim 3, wherein the first virtual machine in the processor transmits an access message for access to a deserializer network to the second signal processing device, and, in response to an access allowance message for access to the deserializer network being received from the second signal processing device, is configured to operate any one of the second signal processing device and the signal processing device as the master signal processing device based on the capability information or the resource information of the second signal processing device.

8. The display apparatus of claim 3, wherein the first virtual machine in the processor is configured to check whether a server virtual machine in the second signal processing device is driven based on protocol information received from an outside, and, in response to the server virtual machine in the second signal processing device being not driven, operate the signal processing device as the master signal processing device.

9. The display apparatus of claim 1, wherein the first virtual machine in the processor is configured to check whether resources of the second signal processing device are sharable based on the capability information or the resource information of the second signal processing device, and, in response to the resources being sharable, share at least some of processed data with the second signal processing device.

10. The display apparatus of claim 3, wherein the first virtual machine in the processor transmits an authority transfer message to a server virtual machine in the second processor during operation of the signal processing device as the master signal processing device, and, upon receiving an acknowledgement message from the server virtual machine in the second processor, is configured to change the second signal processing device to the master signal processing device.

11. The display apparatus of claim 1, wherein the first virtual machine in the processor receives capability information or resource information of a plurality of virtual machines driven in the second signal processing device, and controls any one of the plurality of virtual machines driven in the second signal processing device based on the capability information or the resource information of the plurality of virtual machines.

12. The display apparatus of claim 1, wherein
the first virtual machine in the processor is configured to write camera data in a first shared memory and transmits some of the camera data to the second signal processing device,
a server virtual machine in the second processor is configured to write the received some of the camera data in a second shared memory, and
a guest virtual machine in the second processor is configured to process at least some of the data written in the second shared memory and write the processed data in the second shared memory.

13. The display apparatus of claim 1, wherein the second virtual machine in the processor is configured to display an image on the display based on the data written in the second shared memory.

14. The display apparatus of claim 12, wherein the first virtual machine in the processor is configured to create a command queue for distributed processing of the data.

15. The display apparatus of claim 14, wherein the command queue comprises at least one of command type information, buffer ID information, or buffer address information.

16. The display apparatus of claim 12, wherein the first virtual machine in the processor is configured to create command queues corresponding to the number of virtual machines for distributed processing of the data.

17. The display apparatus of claim 12, wherein
the first virtual machine in the processor writes some of the camera data in the first shared memory to be transmitted to the second processor, and
the guest virtual machine in the second processor is configured to perform object detection for the received camera data and write the data from which an object has been detected in the second shared memory.

18. A display apparatus for vehicle, the display apparatus comprising:
a first display and a second display located in a vehicle;
a signal processing device comprising a processor configured to perform signal processing for the first display and the second display; and
a second signal processing device comprising a second processor configured to perform signal processing for a third display, wherein
the processor in the signal processing device is configured to execute first to third virtual machines on a hypervisor in the processor, and
the first virtual machine in the processor is configured to check capability information or resource information of the second signal processing device, and operate any one of the second signal processing device and the signal processing device as a master signal processing device based on the capability information or the resource information of the second signal processing device.
